# EUROPEAN PATENT APPLICATION

(11) **EP 4 636 761 A1**
(43) Date of publication of application: **22.10.2025**
(21) Application number: 24822416.4
(22) Date of filing: 25.04.2024
(51) Int. Cl.: G10L 21/028

(54) **SPEECH PROCESSING METHOD AND APPARATUS, DEVICE, MEDIUM, AND PROGRAM PRODUCT**

(30) Priority: 13.06.2023 CN 202310699993
(71) Applicant: Tencent Technology (Shenzhen) Company Limited, Shenzhen, Guangdong 518057 (CN)
(72) Inventor: FENG, Xin, Shenzhen, Guangdong 518057 (CN)
(74) Representative: EP&C
(86) International application number: PCT/CN2024/089862
(87) International publication number: WO 2024/255461

(57) **Abstract**

A speech processing method and apparatus, a computer device, a storage medium, and a program product are provided. The method includes: obtaining mixed speech data (S301); obtaining reference speech data of a pre-determined object (S302); extracting a voiceprint representation vector of the pre-determined object from the reference speech data, the voiceprint representation vector being configured to represent a voiceprint characteristic of the pre-determined object, and inputting the mixed speech data and the voiceprint representation vector into a preset speech segmentation model, the speech segmentation model being configured to segment, based on an attention mechanism, the mixed speech data to obtain a target speech signal matching the voiceprint characteristic (S303); and the target speech signal being configured to generate a speech file of the pre-determined object (S304). According to the method, the mixed speech data can be segmented to obtain a clean speech signal of any specified object.

## Description

### RELATED APPLICATION

This application claims priority to Chinese Patent Application No. 202310699993.5, filed with the China National Intellectual Property Administration on June 13, 2023, and entitled "SPEECH PROCESSING METHOD AND APPARATUS, DEVICE, MEDIUM, AND PROGRAM PRODUCT", which is incorporated herein by reference in its entirety.

### FIELD OF THE TECHNOLOGY

This application relates to the field of computer technologies, in particular, to the field of artificial intelligence, and specifically, to a speech processing method, a speech processing apparatus, a computer device, a computer-readable storage medium, and a computer program product.

### BACKGROUND OF THE DISCLOSURE

Mixed speech data (or referred to as a mixed speech or an overlapping speech) is speech data containing speech signals mixed with a plurality of sound sources (namely, sound-producing objects). For example, in a meeting scenario, mixed speech data recorded from a physical environment by a recording device may include speech signals produced by a plurality of participants, and may further include speech signals produced by some devices (for example, devices playing meeting videos) in the physical environment.

Currently, source separation methods provided for mixed speech data include the following. 1. The mixed speech data is separated through human ears, which relies on manual listening, leading to a long segmentation process and low efficiency. 2. The mixed speech data is separated depending on timbre and frequency, which fails to achieve accurate segmentation when a plurality of objects have similar timbre or frequency. 3. The mixed speech data is separated based on the distance between sound sources, which restricts speech segmentation due to varying distances between sound sources. 4. The mixed speech data is separated using a dedicated speech segmentation model of a specified object. This method is non-portable, lacking generality.

### SUMMARY

Embodiments of this application provide a speech processing method and apparatus, a device, a medium, and a program product, which can segment mixed speech data to obtain a clean speech signal of any specified object, ensuring generality.

According to an aspect, an embodiment of this application provides a speech processing method, performed by a computer device. The method includes:
obtaining mixed speech data, the mixed speech data corresponding to speech signals produced by at least two objects;
obtaining reference speech data of a pre-determined object being one of the at least two objects, and the reference speech data corresponding to a reference speech signal of the pre-determined object;
extracting a voiceprint representation vector of the pre-determined object from the reference speech data, the voiceprint representation vector being configured to represent a voiceprint characteristic of the pre-determined object;
inputting the mixed speech data and the voiceprint representation vector into a preset speech segmentation model, the speech segmentation model being configured to segment, based on an attention mechanism, the mixed speech data to obtain a target speech signal matching the voiceprint characteristic; and
the target speech signal being configured to generate a speech file of the pre-determined object.

According to another aspect, an embodiment of this application provides a speech processing apparatus. The apparatus includes:
an obtaining unit, configured to obtain mixed speech data, the mixed speech data corresponding to speech signals produced by at least two objects;
the obtaining unit being further configured to obtain reference speech data of a pre-determined object being one of the at least two objects, and the reference speech data corresponding to a reference speech signal of the pre-determined object; and
a processing unit, configured to extract a voiceprint representation vector of the pre-determined object from the reference speech data, the voiceprint representation vector being configured to represent a voiceprint characteristic of the pre-determined object,
the processing unit being further configured to input the mixed speech data and the voiceprint representation vector into a preset speech segmentation model, the speech segmentation model being configured to segment, based on an attention mechanism, the mixed speech data to obtain a target speech signal matching the voiceprint characteristic; and
the processing unit being further configured to generate a speech file of the pre-determined object.

According to another aspect, an embodiment of this application provides a computer device. The computer device includes:
a processor, configured to load and execute a computer program; and
a computer-readable storage medium, having the computer program stored therein, the computer program, when executed by the processor, implementing the foregoing speech processing method.

According to another aspect, an embodiment of this application provides a computer-readable storage medium, having a computer program stored therein. The computer program is configured to be loaded and executed by a processor and perform the foregoing speech processing method.

According to another aspect, an embodiment of this application provides a computer program product, including a computer program, the computer program, when executed by a processor, implementing the foregoing speech processing method.

In the embodiments of this application, to-be-segmented mixed speech data is obtained, where the mixed speech data contains a speech signal produced by each of at least two objects. If there is a need to segment a speech signal produced by a specified object of the at least two objects, a segment of reference speech data of the specified object (for example, several seconds of speech produced by the specified object) may be obtained. The specified object may be any one of the at least two objects. A voiceprint representation vector of the specified object is extracted from the reference speech data. The voiceprint representation vector can represent a voiceprint characteristic of the specified object. The voiceprint characteristic is unique and can represent an identity of the specified object. In this way, the voiceprint representation vector that can uniquely represent the identity of the specified object and the to-be-segmented mixed speech data may be inputted into a preset speech segmentation model, so that the speech segmentation model can segment, based on an attention mechanism, the mixed speech data to obtain a target speech signal matching the voiceprint characteristic of the specified object, to generate a separate speech file of the specified object based on the target speech signal obtained through segmentation. The embodiments of this application support extracting the voiceprint representation vector representing the voiceprint characteristic of the specified object from clean reference speech data of the specified object, and using the voiceprint representation vector a reference, so that the target speech signal of the specified object is clearly and accurately calculated and extracted from the mixed speech data using the attention mechanism provided by the speech segmentation model, thereby improving the cleanliness of the extracted target speech signal, and achieving a more accurate speech separation effect. In addition, in the embodiments of this application, the mixed speech data can be segmented to obtain the target speech signal of the specified object by obtaining only the reference speech data of the specified object. To obtain speech data of another object, it is only necessary to replace a voiceprint representation vector of an object for segmentation, without the need to train a dedicated network for each object, which greatly improves convenience and portability, and improving the generality of this solution.

### BRIEF DESCRIPTION OF THE DRAWINGS

FIG. 1 is a schematic architectural diagram of a speech processing system according to an exemplary embodiment of this application.
FIG. 2 is a schematic architectural diagram of a speech processing scenario according to an exemplary embodiment of this application.
FIG. 3 is a schematic flowchart of a speech processing method according to an exemplary embodiment of this application.
FIG. 4 is a schematic diagram of an interface on which a user inputs reference speech data of a specified object according to an exemplary embodiment of this application.
FIG. 5 is a schematic structural diagram of an existing Unet network.
FIG. 6 is a schematic structural diagram of a speech segmentation model constructed by adding an attention mechanism to each network layer in a Unet network according to an exemplary embodiment of this application.
FIG. 7a is a schematic diagram of speech segmentation when a target network layer is a convolutional layer or a convolutional connection layer according to an exemplary embodiment of this application.
FIG. 7b is a schematic diagram of speech segmentation when a target network layer is an upsampling layer according to an exemplary embodiment of this application.
FIG. 8 is a schematic flowchart of another speech processing method according to an exemplary embodiment of this application.
FIG. 9 is a schematic flowchart of voiceprint vector extraction according to an exemplary embodiment of this application.
FIG. 10 is a schematic structural diagram of improved PANNs according to an exemplary embodiment of this application.
FIG. 11 is a schematic structural diagram of a transformer network according to an exemplary embodiment of this application.
FIG. 12 is a schematic structural diagram of a speech processing apparatus according to an exemplary embodiment of this application.
FIG. 13 is a schematic structural diagram of a computer device according to an exemplary embodiment of this application.

### DESCRIPTION OF EMBODIMENTS

In the embodiments of this application, a speech processing solution is provided, and specifically, a speech separation solution for source separation of mixed speech data is provided. The mixed speech data may be briefly referred to as mixed speech or a mixed audio signal, and is audio containing a mixture of a plurality of speech signals (or referred to as audio signals). That is, the "mixed" may be understood as blending/intertwining of a plurality of speech signals. In an actual application scenario, the mixed speech data may be understood as: speech data that is directly captured from an environment using a recording device (for example, a microphone) and contains speech signals produced by a plurality of sound sources. The plurality of speech signals may be produced by different objects (or referred to as sound sources), and the objects herein may include, but are not limited to: a human, an animal, or a physical device (for example, a vehicle). Sources of a plurality of speech signals contained in mixed speech data are not limited in the embodiments of this application. For example, in a meeting scenario involving a plurality of participants in discussions, the captured speech data usually contains speech signals produced by different participants. Certainly, if the meeting scenario further includes a device for playing audio or video, the captured speech data further contains a speech signal sent by the device. In this way, the speech data captured in the meeting scenario may be referred to as mixed speech data. The mixed speech data contains speech signals produced by a plurality of objects in a conversation scenario.

Further, the source separation refers to: a process of separating a speech signal of a specified object from mixed speech data. In other words, the source separation may be simply understood as: a technology of separating the mixed speech data through signal processing or other algorithms to obtain a target speech signal of a specified object from the mixed speech data, and finally generating a separate audio file (or speech file) of the specified object. For example, after a segment of mixed speech data is captured in an outdoor noisy scenario, a target speech signal produced by a specified object may be extracted from the mixed speech data using a source separation technology, to generate a speech file of the specified object. In this way, when the speech file is played, only the speech produced by the specified object exists, thereby identifying the speech generated by the specified object.

Based on simple descriptions of concepts of mixed speech data and source separation, the embodiments of this application provide a new speech processing solution. The solution mainly includes: obtaining to-be-segmented mixed speech data, where the mixed speech data contains a speech signal produced by each of at least two objects, for example, the speech signal contained in the mixed speech data includes: a speech signal produced by an object 1 and a speech signal produced by an object 2; and if a user intends to extract a target speech signal produced by a specified object (for example, any one of the at least two objects) from the mixed speech data, a segment of reference speech data containing a reference speech signal of the specified object may be obtained. In this way, a voiceprint representation vector of the specified object may be extracted based on the reference speech data. The voiceprint representation vector can represent a voiceprint characteristic of the specified object. The voiceprint characteristic may be understood as a sound characteristic of the specified object, for example, a unique pitch or timbre of the specified object. In this way, the voiceprint representation vector of the specified object and the mixed speech data are inputted into the speech segmentation model, so that the target speech signal matching the voiceprint characteristic of the specified object can be extracted from the mixed speech data through segmentation using an attention mechanism in the speech segmentation model, thereby generating a separate speech file for the specified object based on the target speech signal.

In the embodiments of this application, depending on uniqueness of the voiceprint characteristic of each user, by only providing a segment of reference speech data of any specified object to extract a voiceprint representation vector representing the voiceprint characteristic of the specified object, a target speech signal of the any specified object can be separated and extracted from mixed speech data based on the voiceprint representation vector. The target speech signal of the specified object can be accurately separated from the mixed speech data, and source separation can be implemented for an object to which any speech signal contained in the mixed speech data belongs, which is highly reusable and portable, thereby reducing the complexity of user input operations, and making the entire system more generalized. In addition, in the embodiments of this application, the voiceprint characteristic of the specified object and the mixed speech data are calculated based on the attention mechanism, thereby greatly improving the clarity and accuracy of the extracted target speech signal of the specified object from the mixed speech data, avoiding excessive noise in the extracted target speech signal, and achieving a more accurate and clean speech separation effect.

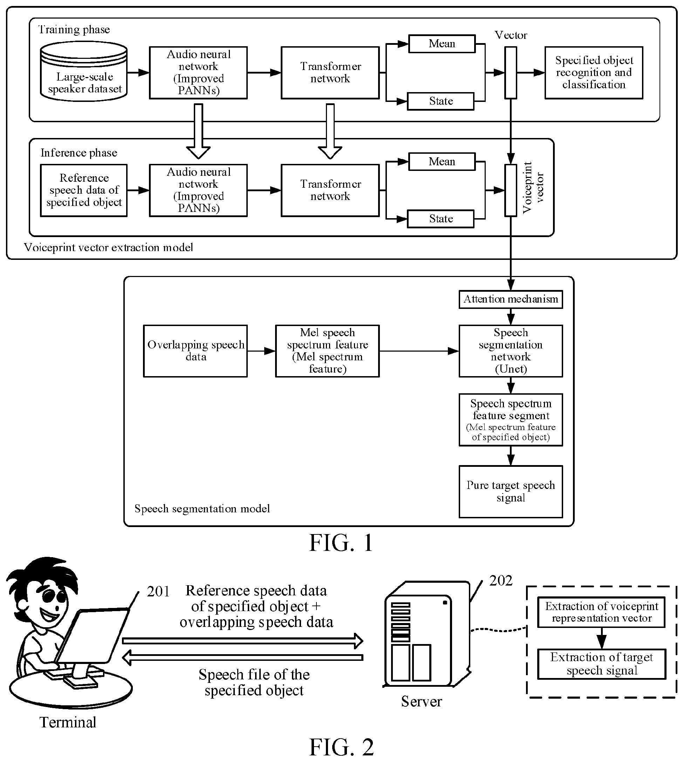

In the embodiments of this application, the speech processing solution is mainly implemented using a reusable specified speaker-specific speech segmentation system based on voiceprint vector embedding. That is, the system deploys the speech processing solution provided in the embodiments of this application. In this way, when any user requires speech signal separation from mixed speech data, the system may be invoked to automatically separate and extract a speech file corresponding to a specified object from the mixed speech data. For an exemplary schematic architectural diagram of the system, reference may be made to FIG. 1. As shown in FIG. 1, the system mainly includes two modules: a voiceprint vector extraction model and a speech segmentation model. The following briefly describes the two modules.
(1) The voiceprint vector extraction model may be referred to as a voiceprint vector extractor, a voiceprint recognition network, or the like. The voiceprint vector extraction model is mainly configured to: identify an identity of a specified object for segmentation, and extract an identity semantic vector of the specified object. The identity semantic vector herein is referred to as a voiceprint representation vector (or a voiceprint vector for short) in this embodiment of this application, and is configured for representing a voiceprint characteristic of the specified object.

Referring to FIG. 1, the voiceprint vector extraction model is constructed based on improved pretrained audio neural networks (PANNs) and a transformer network. The voiceprint vector extraction model is fully trained using an open-source large-scale speaker dataset (a dataset containing rich speech data), and the trained voiceprint vector extraction model has a capability of fully expressing a voiceprint characteristic of an object. In this way, the voiceprint vector extraction model may be used as a voiceprint vector extractor of the entire system. During an inference phase, after model parameters pre-trained using the large-scale speaker dataset is loaded, the trained voiceprint vector extraction model may be used to calculate a voiceprint representation vector of a specified object for reference speech data (for example, a small segment (such as several seconds or more than ten seconds) of speech) of the specified object. The voiceprint representation vector is configured for representing a voiceprint characteristic of the specified object. By training the voiceprint vector extraction model using the large-scale speaker dataset, there is no need to specifically capture related training data for each object in the mixed speech data, which eliminates the reliance on data extraction for objects in the mixed speech data to construct a model exclusive to an object.
1. The improved PANNs in the voiceprint vector extraction model are an improvement on conventional PANNs. The improvement is mainly reflected in: the design of an information exchange link between a time domain link and a frequency domain link, allowing for a plurality of information exchanges between a time domain and a frequency domain during the process of voiceprint representation vector extraction. This enables the time domain and the frequency domain to maintain complementary information, allowing a higher-level network to fully perceive information from a lower-level network, thereby improving the accuracy of voiceprint vector extraction. PANNs are audio neural networks trained based on a large-scale audio dataset (containing speech data from a wide range of speakers); and are usually configured for audio pattern recognition or audio frame-level embedding, as an encoding network at the front end of a model. 2. The transformer network is a model that relies on the attention mechanism to calculate the transformation between input and output. The transformer network abandons a convolutional model structure and achieves good performance only through the attention mechanism and a feedforward neural network, without the need to use a sequence-aligned recurrent architecture.

(2) The speech segmentation model may be referred to as a semantic segmentation network, a segmentation network, or the like. The speech segmentation network is mainly configured to: receive a voiceprint characteristic (specifically, receive a voiceprint representation vector) related to a specified object that is inputted by the voiceprint vector extraction model, and extract a speech signal matching the voiceprint characteristic of the specified object from mixed speech data based on a voiceprint representation vector and using the attention mechanism.

Referring to FIG. 1, the speech segmentation model is a segmentation model in which the attention mechanism is integrated. By incorporating the attention mechanism into the segmentation network for refinement, a target speech signal related to a voiceprint feature of the specified object can be calculated by incorporating the attention mechanism during the process of feature processing on the mixed speech data by the segmentation network, so that the mixed speech data can be segmented to obtain the target speech signal of the specified object. In this way, the target speech signal of the specified object in the mixed speech data can be more clearly and accurately calculated and extracted, and a clean target speech signal of the specified object can be separated, thereby achieving a more accurate and clean speech separation effect. The attention mechanism is a problem-solving method proposed by imitating human attention. In short, it imitates human attention to quickly select information to focus on from a large amount of information. It is mainly configured for resolving a problem that it is difficult to obtain a proper vector representation when an input sequence of the time sequence model is long. The approach involves retaining intermediate results of the time sequence model, using a new model to learn from them, and associating them with the output, thereby achieving information selection.

In conclusion, the system provided in this embodiment of this application includes two modules, and after the voiceprint vector extraction model extracts the voiceprint representation vector that can represent the voiceprint characteristic of the specified object from the reference speech data of the specified object, the voiceprint representation vector may be embedded into the speech segmentation model. In this way, the speech segmentation model may extract and separate the speech signal matching the voiceprint characteristic from the mixed speech data based on the attention mechanism, thereby achieving a good signal separation effect. Referring to FIG. 1, the system provided in this embodiment of this application is a fully automatic segmentation system constructed based on a plurality of deep learning neural networks (such as improved PANNs, a transformation network, and a segmentation network integrated with an attention mechanism). For the fully automatic segmentation system, provided that a user inputs the reference speech data of the specified object and to-be-segmented mixed speech data into the fully automatic segmentation system, the fully automatic segmentation system can automatically and rapidly extract a speech signal of the specified object from the mixed speech data, thereby greatly improving the speech segmentation efficiency, completely eliminating manual participation, and forming rapid standardization. In addition, the voiceprint characteristic extracted by the voiceprint vector extraction model is innovatively embedded into a model architecture of the speech segmentation model, making a speech separation model in the system reusable. The reusable means that each time the system performs source separation, it is only necessary to replace the extracted voiceprint characteristic of the object, without the need to train a separate segmentation network for each object, enabling the network to be easily portable, and providing the entire system with high generality.

The system shown in FIG. 1 may be deployed in a computer device, and may be specifically deployed in an application (for example, deployed in a plug-in form in an application) run in the computer device. That is, an application run in the computer device is used for providing this solution. 1. The application may be a computer program that completes one or more specific tasks. Applications are classified according to different dimensions (such as running manners and functions of the applications), and types of the same application in different dimensions can be obtained. For example, if the applications are classified according to running manners of the applications, the applications may include, but are not limited to: a client installed in a terminal, an applet (as a subprogram of the client) that can be used without downloading and installing, a web (World Wide Web) application opened through a browser, and the like. For another example, if the applications are classified according to function types of the applications, the applications may include, but are not limited to: an instant messaging (IM) application, a content interaction application, an audio application, a video application, and the like. The instant messaging application refers to an Internet-based instant message exchange and social interaction application. The instant messaging application may include, but is not limited to: a social application including a communication function, a map application including a social interaction function, a game application, and the like. The content interaction application refers to an application that can implement content interaction, and may be, for example, an application such as online banking, a sharing platform, a personal space, or news. The audio application refers to an application that implements an audio function based on the Internet, and the audio application may include, but is not limited to: a music application including music playback and editing capabilities, a radio application including a radio playback capability, a live streaming application including a live streaming capability, or the like. The video application refers to an application that can play video images, and the video application may include, but is not limited to: an application that features short videos (often with a shorter video duration, such as several seconds or minutes), an application including long videos (such as film or TV dramas with longer playback durations), or the like.

2. The computer device may include a terminal and/or a server. The terminal may include, but is not limited to: a device such as a smartphone (for example, a smartphone deployed with an Android system or a smartphone deployed with an Internetworking Operating System (IOS)), a tablet computer, a portable personal computer, a mobile Internet device (MID), an in-vehicle device, a head-mounted device, a smart TV, a smart household, or the like. A type of the terminal is not limited in the embodiments of this application. Details are described herein. The terminal is deployed with a system shown in FIG. 1, an application (or a plug-in) providing the system, or the like. The server may be an independent physical server, or may be a server cluster or a distributed system formed by a plurality of physical servers, or may be a cloud server that provides basic cloud computing services such as a cloud service, a cloud database, cloud computing, a cloud function, cloud storage, a network service, cloud communication, a middleware service, a domain name service, a security service, a content delivery network (CDN), big data, and an artificial intelligence platform.

The embodiments of this application may be performed by the terminal or the server, or may be performed jointly by the terminal and the server. For an exemplary schematic architectural diagram of a system in which a terminal and a server jointly perform a speech processing solution, reference may be made to FIG. 2. As shown in FIG. 2, the terminal 201 is a device held by a user having a speech separation requirement. When the user has a need of separating a speech file of a specified object from mixed speech data, the user may send to-be-segmented mixed speech data and reference speech data of the specified object to the server 202 using the terminal 201. In this way, after receiving the reference speech data of the specified object and the to-be-segmented mixed speech data, the server 202 may first perform identity recognition on the reference speech data using a voiceprint vector extraction model in the system, to obtain a voiceprint representation vector configured for representing an identity of the specified object, and then embed the voiceprint representation vector into a speech segmentation model in the system. After receiving the voiceprint representation vector of the specified object and the to-be-segmented mixed speech data, the speech segmentation model can extract a clean target speech signal matching a voiceprint characteristic represented by the voiceprint representation vector from the mixed speech data based on an attention mechanism, to generate the speech file of the specified object based on the target speech signal. In this way, the server 202 returns the speech file of the specified object to the terminal 201, so that the user can play, using the terminal 201, a speech file containing only speech data of the specified object.

A procedure of the speech processing solution is briefly described above using an example in which the computer device is a terminal and a server. However, when the computer device is a terminal or a server, the idea of performing the speech processing solution by the computer device is similar to that of the foregoing procedure, with the main difference being the execution body. Details are not described herein again. In addition, the terminal 201 and the server 202 shown in FIG. 2 may be connected directly or indirectly in a wired or wireless communication manner. This is not limited in this application.

Further, the speech processing solution provided in the embodiments of this application is applicable to any application scenario with a speech segmentation requirement. According to different application scenarios, the computer device provided in this solution may vary. This is not limited. The application scenario may include, but is not limited to, at least one of the following: a film and TV drama scenario, an audio and video creation scenario, a conversation scenario, or the like.

In some embodiments, the application scenario is a film and TV drama scenario. For example, the film and TV drama scenario is a dubbing scenario for characters in a film or TV drama. Specifically, at a production phase of a film or TV drama, voice actors often need to dub specific characters in the film or TV drama (for example, after mixed speech data obtained through sound recording is submitted for review, some lines that fail to meet regulatory standards may need to be re-recorded). However, speech data obtained through sound recording in a filming process or a post-production process of a film or TV drama is usually mixed speech data containing a plurality of speech signals. Therefore, before dubbing, it is necessary to extract the clean speech signals of other actors from the mixed speech data, except for the speech signal of the specified actor to be re-dubbed, so that the re-dubbed speech signal of the specified actor is mixed with the extracted clean speech signals of the other actors to generate new mixed speech data to be added to the film or TV drama. In the film and TV drama scenario, accurate speech segmentation can be provided according to the embodiments of this application, and it does not require a large amount of data from all actors to train a dedicated segmentation network, so that the clean speech of the actors can be quickly and efficiently extracted and obtained through segmentation.

In some embodiments, the application scenario is an audio and video creation scenario. For example, the audio and video creation scenario is a re-creation scenario for audio and video (that is, creation is performed again for existing audio and video). Specifically, in the re-creation scenario, a user prefers to extract some lines of a specified actor in a plurality of audio and video sources for dialogue editing, that is, editing speech data of the specified actor in different audio and video to the same audio and video. This involves extracting a clean speech signal of the specified actor in the plurality of audio and video sources. Considering that the lines in each audio and video are accompanied by background music or speech signals of other objects, it is necessary to remove the background music from the audio and video to obtain the clean speech signal of the specified actor, so that the plurality of extracted clean speech signals are fused to generate the edited speech file corresponding to the specified actor.

In some embodiments, the application scenario is a conversation scenario. For example, the conversation scenario is an online meeting scenario. Specifically, in the online meeting scenario, there is often a need for speech-to-text transcription, that is, converting recorded speech data into a text form. However, in an online meeting scenario involving a plurality of participants, transcribing mixed speech data containing speech signals of a plurality of persons has always been a challenge. Transcription refers to a process of converting a speech signal of a specified person among the plurality of persons into text. According to the embodiments of this application, a speech signal of each object may be first extracted from mixed speech data through segmentation based on a voiceprint characteristic of each object participating in the online meeting, and then the speech signal of each object is inputted into a speech recognition system to implement text transcription, which can greatly improve the accuracy of mixed speech transcription in conversations.

Application scenarios to which the speech processing solution provided in this embodiment of this application is applicable are not limited to the foregoing several types. In addition, depending on different application scenarios, the applications or platforms that support the speech processing solution may vary.

The relevant data collection and processing in the embodiments of this application need to be strictly in accordance with the requirements of relevant laws and regulations. The obtaining of personal information needs to be subject to the knowledge or consent of the individual (or the legal basis for obtaining the information), and the subsequent data use and processing need to be carried out within the scope of authorization of laws and regulations and the subject of personal information. For example, when the embodiments of this application are applied to specific products or technologies, such as obtaining reference speech data of a specified object, it is necessary to obtain the permission or consent of the specified object, and the collection, use, and processing of relevant data (such as the collection and publication of danmaku subtitles posted by the object) need to comply with relevant laws, regulations, and standards of the relevant regions.

Based on the speech processing solution described above, an embodiment of this application provides a more detailed speech processing method. The following describes the speech processing method provided in this embodiment of this application in further detail with reference to the accompanying drawings.

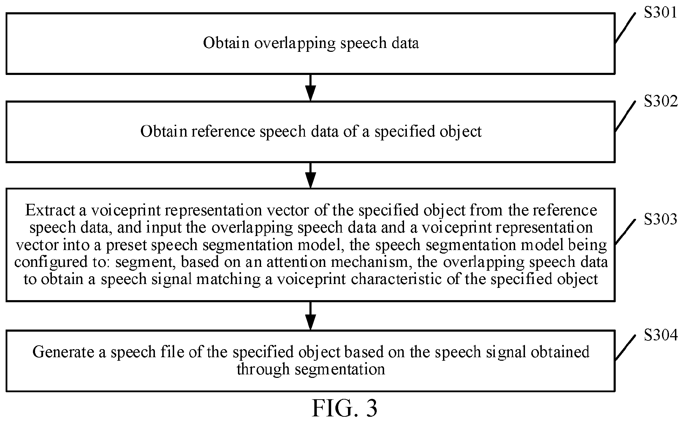

FIG. 3 is a schematic flowchart of a speech processing method according to an exemplary embodiment of this application. The speech processing method may be performed by the computer device in the system described above. For example, the computer device is a terminal and/or a server. The speech processing method may include, but is not limited to, operations S301 to S304.

S301: Obtain to-be-segmented mixed speech data.

S302: Obtain reference speech data of a pre-determined object (namely, a specified object) in at least two objects.

In operations S301 and S302, the to-be-segmented mixed speech data contains a speech signal generated by each of the at least two objects. For example, a heavy metal song contains a "lyric" speech signal produced by a "singer", a "melody" speech signal produced by a "guitar", and a "melody" speech signal generated by a "drum set". Therefore, it is determined that the heavy metal song is mixed speech data, and objects contained in the mixed speech data are: the singer, the guitar, and the drum set. Speech signals contained in the mixed speech data are the speech signal produced by the "singer", the speech signal generated by the "guitar", and the speech signal produced by the "drum set".

Further, if a user has a need of separating and extracting a speech signal of a specific object from the mixed speech data, reference speech data of the specific object may be obtained. In this case, the specific object is referred to as a specified object, and the reference speech data of the specified object is different from the mixed speech data, but the reference speech data includes a clean reference speech signal of the specified object. In this way, the reference speech signal contained in the reference speech data of the specified object may be used as a reference signal for separating a target speech signal of the specified object from at least two speech signals corresponding to the at least two objects contained in the mixed speech data. The specified object and the reference speech data are briefly described below. 1. The specified object may be any object from the at least two objects contained in the mixed speech data, from which the user intends to extract the speech signal. It can be known from the foregoing descriptions that the object may be a human, an animal, or a physical device. For ease of description, an object type of the specified object being a human is used as an example for description. Details are described herein. For example, in the foregoing example of the heavy metal song, if the user intends to extract the "lyrics" produced by the "singer" from the noisy heavy metal song, the "singer" is determined as the specified object. In this case, it is necessary to separate the speech signal produced by each instrument and the speech signal produced by the "singer" in the heavy metal song, and extract the clean speech signal of the "singer".

2. The reference speech data is a segment of speech data containing a reference speech signal of the specified object. To ensure that a relatively clean voiceprint characteristic of the specified object can be extracted from the reference speech data, the reference speech data needs to be a segment of relatively clean speech data containing the specified object. For example, the reference speech data contains only the reference speech signal of the specified object. For another example, the reference speech data contains both the reference speech signal of the specified object and other speech signals, but it needs to be ensured that the reference speech signal of the specified object is easily extracted from the reference speech data containing the other speech signals (for example, the other speech signals have a lower signal frequency, and the reference speech signal of the specified object has a higher signal frequency), which is beneficial to analysis for clean reference speech data, to extract a relatively accurate voiceprint characteristic of the specified object. A type, duration, and source of the reference speech data is not limited in this embodiment of this application. For example, the type of the reference speech data may include, but is not limited to: a segment of audio produced by a specified object reading an article, a segment of audio produced by a specified object speaking, a segment of audio produced by a specified object singing acapella, or the like. The duration of the reference speech data may be a few seconds, more than ten seconds, or the like. The source of the reference speech data may include, but is not limited to, the following. When the specified object and the user having the speech separation requirement are different users, the reference speech data may be sent by the specified object to the user, or may be obtained by the user by downloading or recording in some ways (such as historical speech information). When the specified object and the user having the speech separation requirement are the same user, the reference speech data may be recorded by the specified object in real time, that is, captured in real time by a microphone deployed in a terminal held by the user.

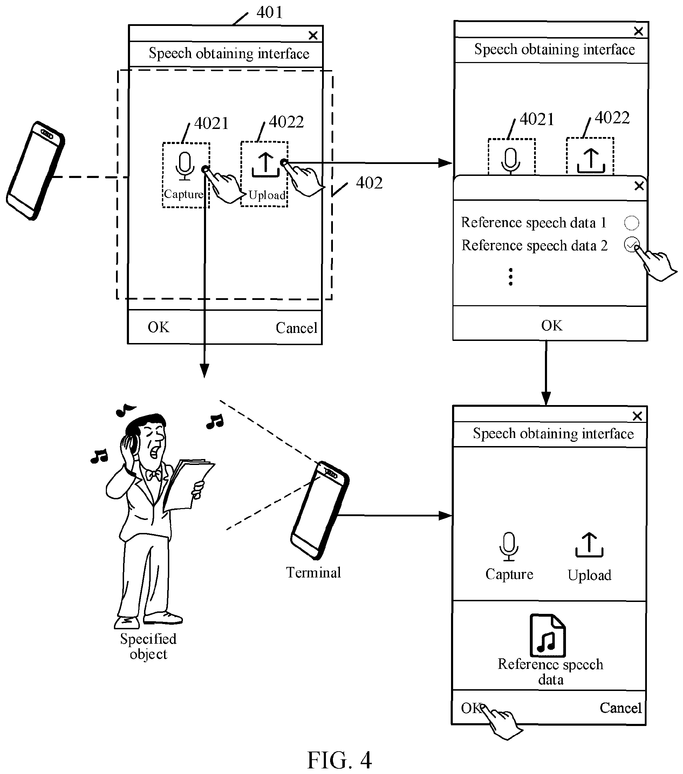

For an exemplary schematic diagram of an interface on which a user inputs reference speech data of a specified object, reference may be made to FIG. 4. As shown in FIG. 4, a speech obtaining interface 401 is displayed on a terminal screen of a terminal held by the user. The speech obtaining interface 401 includes an obtaining area 402 related to reference speech data. Specifically, the obtaining area 402 may display at least two types of speech obtaining entries such as a capture entry 4021 and an upload entry 4022. When the capture entry 4021 is triggered, it indicates that the user intends to input reference speech data of a specified object (where the specified object is the user, or the specified object and the user are in the same physical environment) through real-time capture, and a microphone of the terminal is turned on, so that a reference speech signal in the physical environment in which the user is located can be captured in real time, to generate the reference speech data. When the upload entry 4022 is triggered, it indicates that the user intends to input the reference speech data of the specified object by uploading a file, and the user may upload the reference speech data related to the specified object from a storage space (such as a local storage space of the terminal, a cloud storage space, or a storage space of the server).

An interface element (for example, interface content contained in the interface) and an interface style of the speech obtaining interface are not limited to those shown in FIG. 4. For example, the speech obtaining interface may further display an upload entry of the mixed speech data, and the user may replace the to-be-segmented mixed speech data using the upload entry. For another example, a text conversion control (or referred to as a component, a key, an option, or the like) may further be added to the speech obtaining interface. In this way, the user may trigger the text conversion control before speech separation or after speech separation, to convert a separated speech signal into a text form by one-click, thereby shortening a text conversion path to some extent, and improving the text conversion efficiency.

S303: Extract a voiceprint representation vector of the pre-determined object from the reference speech data, and input the mixed speech data and the voiceprint representation vector into a preset speech segmentation model, the speech segmentation model being configured to: segment, based on an attention mechanism, the mixed speech data to obtain a speech signal matching a voiceprint characteristic of the specified object.

S304: the target speech signal being configured to generate a speech file of the pre-determined object; in embodiments of the present application, S304 can also include following operations: Generate a speech file of the specified object based on the speech signal obtained through segmentation.

In operations S303 and S304, a voiceprint is a sound wave spectrum carrying speech information, and is a biological feature including a plurality of feature dimensions such as wave length, frequency, and intensity. The voiceprint has characteristics such as stability, measureability, and uniqueness, and may be configured for uniquely identifying a sound characteristic of an object. That is, the voiceprint may be configured for representing an identity of an object. Therefore, in this embodiment of this application, after relatively clean reference speech data of the specified object is obtained, the voiceprint characteristic of the specified object can be extracted from the reference speech data, so that speech signal separation and extraction can be subsequently performed based on the unique voiceprint characteristic.

It can be known from the system shown in FIG. 1 that, the voiceprint characteristic configured for representing the identity of the specified object can be extracted from the reference speech data through the analysis on the reference speech data using the voiceprint vector extraction model. In actual applications, the voiceprint vector extraction model outputs a voiceprint representation vector (or a voiceprint vector for short) of the specified object. In other words, the voiceprint vector extraction model analyzes the reference speech data, to obtain the voiceprint representation vector that can be configured for representing the voiceprint characteristic of the specified object. Further, after the voiceprint vector extraction model extracts the voiceprint representation vector of the specified object, a voiceprint information representation may be innovatively transferred in a vector embedding manner. The voiceprint representation vector is inputted into the speech segmentation model to participate in the calculation of the attention mechanism, so that the mixed speech data is segmented to obtain a target speech signal matching the voiceprint characteristic of the specified object. This innovative vector embedding mechanism allows the speech segmentation model for additional training without relying on historical speech data of any object, but only requires the extraction of a voiceprint representation vector from a small amount of reference speech data. This can eliminate the dependence on large-scale speech data, making the system highly reusable and portable and the entire system more efficient, reducing the complexity of user input operation, and improving the generality of the system.

The speech segmentation model provided in this embodiment of this application is obtained by improving a conventional speech segmentation network using an attention mechanism. Specifically, the attention mechanism is integrated into the conventional speech segmentation network. The conventional speech segmentation network in this embodiment of this application is a Unet (or represented as U-net, U-Net, or the like) network. The Unet is one of algorithms for performing semantic segmentation using a fully convolutional network, and mainly uses a symmetrical U-shaped structure including a compression path and an expansion path.

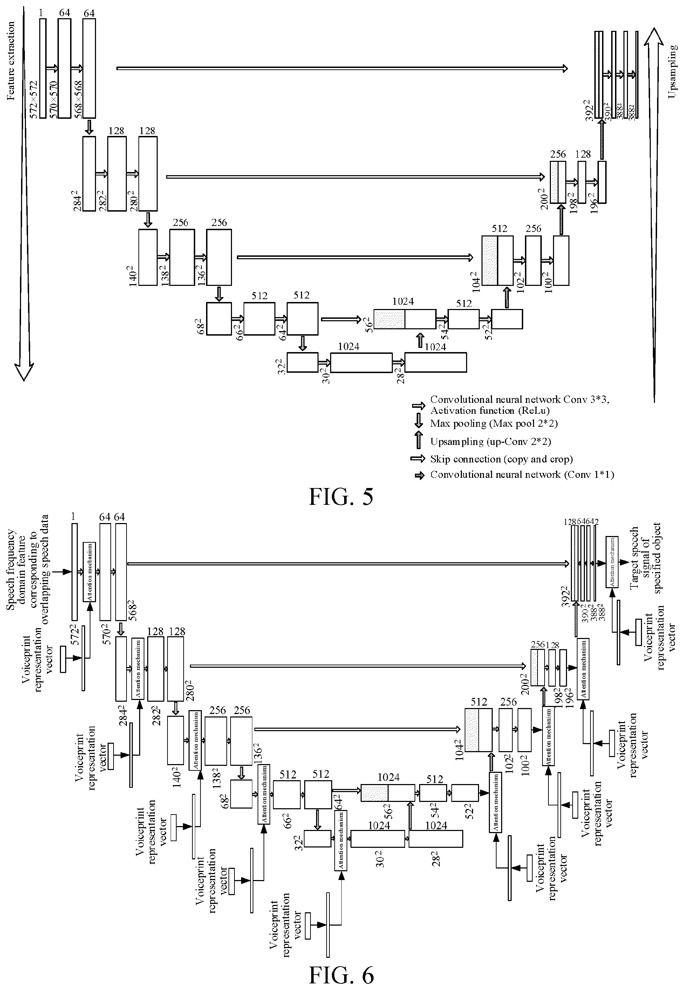

For an exemplary schematic diagram of a network structure of a Unet network, reference may be made to FIG. 5. As shown in FIG. 5, the Unet network is of a U-shaped symmetric network structure. The symmetric network structure includes a bilaterally symmetric feature extraction subnetwork and upsampling subnetwork, and the feature extraction subnetwork and the upsampling subnetwork are connected by a convolutional connection layer. 1. The feature extraction subnetwork may be simply understood as a downsampling layer or an encoding network, and includes m (m=4 in FIG. 5) convolutional layers hierarchically distributed (where a feature map outputted by a previous-level convolutional layer is used as an input of an adjacent next-level convolutional layer), where m is a positive integer. The m convolutional layers hierarchically distributed means that the m convolutional layers are sequentially connected, the former convolutional layer in any two adjacent convolutional layers of the m convolutional layers is used as the previous-level convolutional layer, the latter convolutional layer is used as the next-level convolutional layer, and a feature map outputted by the convolutional layer of the previous level is used as an input of an adjacent next-level convolutional layer. As shown in FIG. 5, a pooling function may be deployed after each convolutional layer. The manner of first performing feature extraction on mixed speech data using a convolutional network in a convolutional layer, and then further extracting a higher-level feature using the pooling function effectively preserves a feature that is expected to be highlighted in the mixed speech data. A type of the pooling function is not limited in this embodiment of this application. For example, the pooling function is max pooling, which tends to obtain a largest feature in a pooling window (for example, with a window size of 2*2) in a feature map outputted by a convolutional layer. 2. Correspondingly, the feature extraction subnetwork and the upsampling subnetwork have symmetry. The upsampling subnetwork may be simply understood as a decoding network, and includes an upsampling layer corresponding to each convolutional layer in the feature extraction subnetwork. As shown in FIG. 5, a transposed convolution (up-Conv) with a convolution kernel of 2*2 is further deployed after the convolutional connection layer and each upsampling layer, thereby achieving an upsampling function through transposed convolution. The Unet network, with the symmetric network structure, can be implemented from scratch for weight initialization and then for model training; or convolutional layer structures (for example, vgg (a convolutional network) in a residual neural network (ResNet)) of some existing networks and corresponding trained weight files may be used for training calculation, along with additional upsampling layers. In this way, an existing weight model file is used during deep learning model training, thereby greatly increasing the model training speed.

Further, each convolutional layer, convolutional connection layer, or upsampling layer includes a plurality of sequentially connected convolutional networks. As shown in FIG. 5, the feature extraction subnetwork, the convolutional connection layer, and the upsampling layer may each include three convolutional networks with a convolution kernel of 3*3. The convolutional network may also be referred to as a convolutional neural network (CNN). The convolutional neural network is a feedforward neural network, mainly including one or more convolutional layers and a fully connected layer at the top, and also including an associated weight and a pooling layer. As shown in FIG. 5, an activation function may be deployed after each convolutional network, to add a nonlinear factor to a model through the activation function, so that a trained model can resolve a problem that cannot be resolved by a linear model. A type of the activation function is not limited in this embodiment of this application. For example, the activation function may be a rectified linear unit function (ReLu, Sigmoid, or Tanh), or the like.

Further, the Unet network may further effectively combine a high-level feature map and a low-level feature map through a skip connection (or copy and crop), to obtain a final feature map. A specific process of the skip connection may include: concatenating a feature map obtained by each convolutional layer in the feature extraction subnetwork to a corresponding upsampling layer in the upsampling subnetwork, so that the feature map at each layer is effectively used in a subsequent calculation. Compared with a network structure in which the skip connection is not implemented, this manner of connecting feature maps of different dimensions through the skip connection can effectively avoid directly performing surveillance and loss calculation in a high-level feature map, and effectively combine features in a low-level feature map, so that the finally obtained feature map includes high-dimensional features and a large number of low-dimensional features, thereby implementing integration of features in different scales and improving the result accuracy of the model.

FIG. 5 describes a conventional network structure of a Unet network in detail. The speech segmentation model provided in this embodiment of this application is obtained based on an improvement on the network structure of the Unet network. In this embodiment of this application, the improvement on the network structure of the Unet network mainly include: an attention mechanism is integrated in all or some network layers (such as a convolutional layer, a convolutional connection layer, and an upsampling layer) in the network structure of the Unet network. That is, based on the attention mechanism, all or some of the speech segmentation models obtained based on the improvement on the Unet network are integrated with the attention mechanism. For ease of description, an example in which an attention mechanism is added to each network layer in the Unet network as a speech segmentation model is used. By adding the attention mechanism to each network layer, a voiceprint representation vector of a specified object can be embedded into each network layer in the Unet network. In this way, each network layer in the network can deeply perceive voiceprint information or a voiceprint characteristic represented by the voiceprint representation vector, thereby making a finally outputted speech signal closer to the specified object, ensuring that the extracted speech signal is cleaner.

For example, for a schematic structural diagram of a speech segmentation model constructed when an attention mechanism is added to each network layer of a Unet network, reference may be made to FIG. 6. As shown in FIG. 6, compared with the Unet network, a basic network architecture of the improved speech segmentation model is the same as that of an original Unet network architecture, but an attention mechanism is added to each level of the Unet network architecture, and input information of the attention mechanism is: the voiceprint representation vector of the specified object and a feature map outputted by a previous level of the attention mechanism. By embedding the voiceprint representation vector of the specified object into each network layer, mainly through attention calculation with the feature map of each network layer, the entire model can deeply perceive and learn the extracted voiceprint representation vector, so that calculation at each level can be close to the voiceprint representation vector, to ensuring that the finally extracted speech signal matches a voiceprint characteristic represented by the voiceprint representation vector. An integration position of the attention mechanism in the plurality of convolutional networks corresponding to the network layer is not fixed, and the fusion position shown in FIG. 6 is an example.

Based on the related descriptions of the network structure of the speech segmentation model in FIG. 6, an example in which an attention mechanism is integrated in each network layer in the speech segmentation model is used below for describing a specific implementation process in which the speech segmentation model segments, based on the attention mechanism, mixed speech data to obtain a speech signal matching a voiceprint characteristic of a specified object, and generates a speech file of the specified object based on the speech signal. The process may include, but is not limited to, operations (1) to (4).
(1) The mixed speech data is converted from a time domain to a frequency domain, to obtain a speech spectrum feature corresponding to the mixed speech data, that is, the speech spectrum feature is a feature representation of the mixed speech data in the frequency domain.

Considering that input information of a Unet network belongs to the frequency domain, the mixed speech data needs to be converted, to obtain the speech spectrum feature corresponding to the mixed speech data. In this way, the speech spectrum feature may be inputted into the speech segmentation network as a picture. The time domain and the frequency domain are two common concepts in audio applications, and are two dimensional concepts for measuring an audio feature. The time domain is a representation of sampling points of the speech signal that are displayed and processed in time, that is, correlated and bound with time. The frequency domain is a feature representation of energy distribution of the speech signal at each frequency band. The conversion of the speech signal from the time domain to the frequency domain or from the frequency domain to the time domain may be achieved using a conversion formula (such as Fourier Transform, Laplace Transform, or Z Transform).

(2) Correlation calculation is performed on the voiceprint representation vector and the speech spectrum feature based on the attention mechanism, to obtain a speech spectrum feature segment matching the voiceprint characteristic.

As shown in FIG. 6, after the voiceprint representation vector of the specified object extracted by the voiceprint vector extraction model is obtained, the voiceprint representation vector is inputted into each network layer in the speech segmentation network, specifically, into the attention mechanism integrated in each network layer. In this way, based on the attention mechanism integrated in each network layer, correlation calculation may be performed on the voiceprint representation vector and a first feature map of the corresponding network layer, to obtain a second feature map outputted by the corresponding network layer. The first feature map of the network layer varies according to different positions of the network layer in the speech segmentation network. This is described in the embodiments below. Then, a second feature map outputted by a (2m+1)^{th} network layer (that is, the last upsampling layer in the upsampling subnetwork) in the speech segmentation model may be used as the speech spectrum feature segment matching the voiceprint representation vector. The speech spectrum feature segment is specifically a segment in the speech spectrum feature that matches the voiceprint characteristic, that is, a segment in the speech spectrum feature that belongs to the specified object. By embedding the voiceprint representation vector configured for representing the voiceprint characteristic of the specified object into each network layer in the speech segmentation model to participate in feature extraction, each network layer in the speech segmentation network can deeply perceive voiceprint information of the specified object, so that the final speech signal outputted through segmentation is closer to the voiceprint characteristic of the specified object, ensuring that the extracted speech signal is cleaner and more accurate.

According to different integration positions of the attention mechanism in the speech segmentation model, a specific implementation process in which the network layer in the feature extraction subnetwork and the upsampling subnetwork performs, according to the integrated attention mechanism, correlation calculation on the voiceprint representation vector and the first feature map outputted by a previous level of the corresponding network layer varies. An example in which any network layer integrated with an attention mechanism in the speech segmentation model is represented as a target network layer is used below, and the target network layer performs correlation calculation according to the attention mechanism for exemplary description.

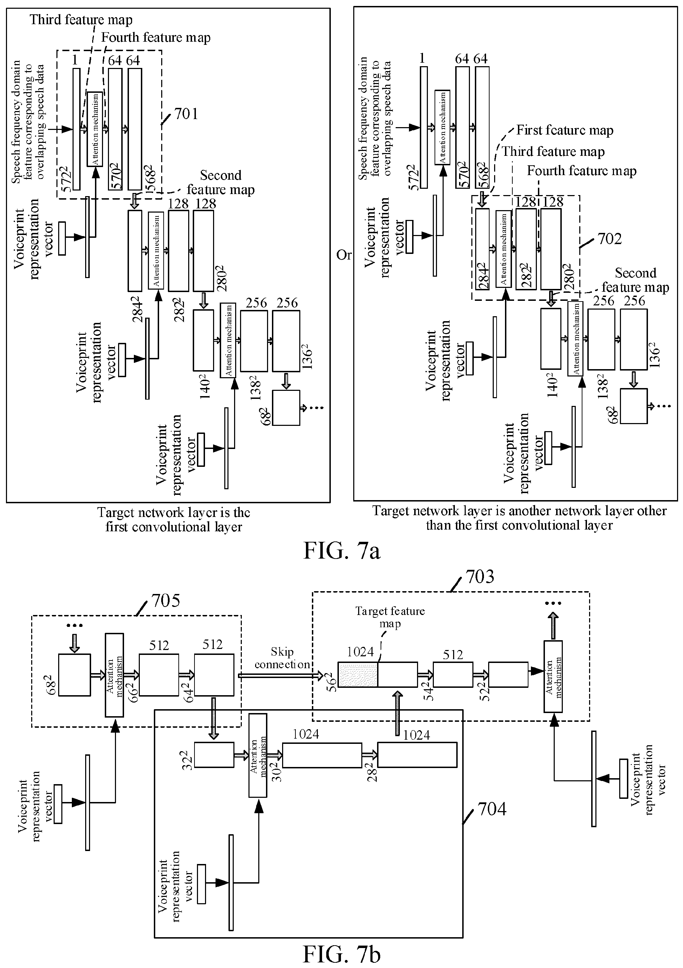

In an implementation, as shown in FIG. 7a, it is assumed that the target network layer is a convolutional layer or a convolutional connection layer in a speech segmentation model, and an integration position of the attention mechanism in a plurality of convolutional networks corresponding to the target network layer is: a position between the first convolutional network and the second convolutional network adjacent to the first convolutional network in the plurality of sequentially connected convolutional networks included in the target network layer. In other words, the integration position of the attention mechanism in the plurality of convolutional networks corresponding to the target network layer is: a position between the first convolutional network in the plurality of sequentially connected convolutional networks included in the target network layer and a convolutional network adjacent to the first convolutional network and located after the first convolutional network in the plurality of sequentially connected convolutional networks. In this implementation, a specific implementation process in which the target network layer performs correlation calculation on the voiceprint representation vector and the first feature map of the target network layer, to obtain the second feature map outputted by the target network layer may include: first, performing feature extraction on the first feature map of the target network layer using the first convolutional network in the target network layer, to obtain a third feature map of the target network layer. The feature extraction herein refers to a process of extracting useful information (namely, a feature) from the first feature map for use in subsequent tasks such as classification, clustering, and regression. A process of the feature extraction may include: preprocessing (for example, processing such as denoising, normalizing, or standardizing) the first feature map, and performing feature extraction on the preprocessed first feature map, to extract a useful feature, selecting a representative or discriminative feature from the extracted feature, and determining the selected feature as a feature obtained through the feature extraction. When the target network layer is the first convolutional layer 701 in the hierarchical distribution of the speech segmentation model (specifically, in the feature extraction subnetwork), the first feature map of the target network layer is a speech spectrum feature obtained by performing frequency domain conversion on mixed speech data. When the target network layer is another convolutional layer (for example, a convolutional layer 702) in the speech segmentation model other than the first convolutional layer 701, the first feature map of the target network layer is obtained by performing pooling processing on a feature map outputted by a previous-level network layer (for example, the convolutional layer 701) adjacent to the target network layer. The pooling processing is performed by a pooling layer in the target network layer. The pooling processing aims to reduce, through parallel processing, data compression, or the like, the size and parameter quantity of a feature map outputted by the previous-level network layer, thereby reducing the calculation amount. Then, correlation calculation is performed on the voiceprint representation vector and the third feature map of the target network layer according to the attention mechanism integrated in the target network layer, to obtain a fourth feature map of the target network layer. A feature dimension of the third feature map of the target network layer is the same as a feature dimension of the fourth feature map. A feature map (such as the third feature map or the fourth feature map) may be represented in a vector form. Therefore, a feature dimension of the feature map may be a dimension of the vector, and each dimension in the vector corresponds to one feature. That is, feature dimensions before and after attention mechanism calculation are the same. Finally, feature extraction is performed on the fourth feature map using another convolutional network in the target network layer other than the first convolutional network, to obtain the second feature map outputted by the target network layer.

In a case in which the target network layer is the convolutional layer or the convolutional connection layer in the speech segmentation model, the attention mechanism is integrated in the plurality of convolutional networks included in the convolutional layer or the convolutional connection layer. In this way, in a process of performing feature extraction on the mixed speech data using the plurality of convolutional networks included in the convolutional layer or the convolutional connection layer, the feature matching the voiceprint representation vector of the specified object can be focused on in the mixed speech data based on the attention mechanism, so that the second feature map matching the voiceprint representation vector is obtained through analysis using the attention mechanism in the feature extraction process, and the target speech signal of the specified object can be further accurately obtained by segmenting the mixed speech data based on the second feature map.

In another implementation, as shown in FIG. 7b, it is assumed that the target network layer is the upsampling layer in the speech segmentation model, and the integration position of the attention mechanism in the plurality of convolutional networks corresponding to the target network layer is: a position after the last convolutional network in the plurality of sequentially connected convolutional networks. In this implementation, a specific implementation process in which the target network layer performs correlation calculation on the voiceprint representation vector and the first feature map of the target network layer, to obtain the second feature map outputted by the target network layer may include: first, performing feature extraction on a target feature map using the plurality of sequentially connected convolutional networks in the target network layer, to obtain the first feature map of the target network layer. The target feature map herein is obtained by performing feature concatenation on a feature map outputted by a convolutional layer corresponding to the target network layer and a feature map outputted by a previous-level network layer of the target network layer. As shown in FIG. 7b, input information of the first upsampling layer 703 in the upsampling subnetwork is a target feature map, and the target feature map is obtained by performing feature concatenation on a feature map outputted by a previous-level convolutional connection layer 704 of the first upsampling layer 703 and a feature map outputted by a convolutional layer 705 corresponding to the first upsampling layer 703. Then, correlation calculation is performed on the voiceprint representation vector and the first feature map of the target network layer using the attention mechanism integrated in the target network layer, to obtain the second feature map outputted by the target network layer. A feature dimension of the second feature map is the same as a feature dimension of the first feature map.

In a case in which the target network layer is the upsampling layer in the speech segmentation model, the attention mechanism is integrated in the plurality of convolutional networks included in the upsampling layer. In this way, after the plurality of convolutional networks included in the upsampling layer are used to perform the feature extraction on the feature map outputted by the previous-level network layer and the feature map outputted by the corresponding convolutional layer, the feature matching the voiceprint representation vector of the specified object can be focused on in the first feature map after the feature extraction based on the attention mechanism, so that the second feature map matching the voiceprint representation vector of the specified object is obtained through analysis, and the target speech signal of the specified object can be further accurately obtained by segmenting the mixed speech data based on the second feature map.

FIG. 7a and FIG. 7b are merely exemplary processes of performing correlation calculation on the target network layer when the attention mechanism is integrated at an exemplary position in each of the feature extraction module, the convolutional connection layer, and the upsampling subnetwork layer. When the attention mechanism is integrated at different fusion positions in the target network layer, a specific implementation process in which the target network layer performs correlation calculation varies.

(3) The speech spectrum feature segment matching the voiceprint characteristic is converted from the frequency domain to the time domain, to obtain a target speech signal matching the voiceprint characteristic.

After the speech spectrum feature segment matching the voiceprint characteristic of the specified object is extracted from the speech spectrum feature corresponding to the mixed speech data based on the foregoing operations, the speech spectrum feature segment further needs to be converted from the frequency domain to the time domain, to obtain the target speech signal that conforms to a data transmission format. A manner of converting the speech spectrum feature segment from the frequency domain to the time domain may include, but is not limited to, the foregoing Fourier Transform, Laplace Transform, Z Transform, or the like, which is not limited thereto.

(4) A speech file of the specified object is generated based on the target speech signal matching the voiceprint characteristic. A file format of the speech file may be set according to a personalized requirement of a user. The file format of the speech file is not limited in this embodiment of this application. For example, when the speech file is a text file, it is possible that the speech signal matching the voiceprint characteristic of the specified object is converted into text using a speech recognition algorithm or tool, text processing (processing such as spelling correction, punctuation addition, and text cleaning) is performed on the converted text, and then a text obtained after the text processing is stored as a text file in a text format (for example, a .doc format). For another example, when the speech file is an audio file, a speech signal matching the voiceprint characteristic of the specified object may be directly stored as an audio file in an audio format (for example, a .WAV format).

It can be learned based on the speech signal extraction process described in operations (1) to (4) that, this embodiment of this application supports the conversion of the mixed speech data from the time domain to the frequency domain, to obtain the speech spectrum feature of the mixed speech data in the frequency domain. In this way, after the mixed speech data is converted into the speech spectrum feature on which the correlation calculation can be performed with the voiceprint representation vector and that belongs to the frequency domain, the attention mechanism of each network layer in the speech segmentation model can be used to perform correlation calculation on the voiceprint representation vector and the speech spectrum feature that both belong to the frequency domain, thereby ensuring the feasibility of the correlation calculation. Considering that an expected signal obtained through segmentation is in the time domain, the speech spectrum feature segment needs to be converted from the frequency domain to the time domain, to obtain the target speech signal matching the voiceprint characteristic, ensuring that the finally extracted signal is a time domain signal that can be understood and read by a device. Considering that feature dimensions vary at each network layer in the speech segmentation network, specifically, feature dimensions of convolutional networks vary at each network layer. Therefore, before the voiceprint representation vector of the specified object is inputted into each network layer in the speech segmentation network, dimension transformation further needs to be first performed on the voiceprint representation vector using one network layer, to obtain the voiceprint representation vector after dimension transformation. The dimension transformation means changing a feature dimension of a voiceprint representation vector, to make the feature dimension of the voiceprint representation vector after dimension transformation the same as a feature dimension of a feature map to be inputted into an attention mechanism integrated in a corresponding network layer. In this way, when the voiceprint representation vector after dimension transformation is inputted into the speech segmentation model, the speech segmentation model can effectively process the voiceprint representation vector, avoiding the unavailability of the voiceprint representation vector caused by different dimensions. The feature map to be inputted into the attention mechanism integrated in the corresponding network layer may be the third feature map described above. In addition, the attention mechanism may be inserted between any two of a plurality of convolutional networks sequentially connected in the network layer. The first feature map of the network layer may be a feature map outputted by a convolutional network adjacent to and located before an attention mechanism in the network layer.

In conclusion, this embodiment of this application innovatively constructs a fully automatic speech processing solution, and the solution implements speech signal segmentation based on voiceprint vector embedding. For users, by inputting only a small segment of reference speech data of a specified object and to-be-segmented mixed speech data, a speech signal of the specified object can be automatically and rapidly separated from the mixed speech data, thereby greatly improving the speech segmentation efficiency, completely eliminating manual participation completely, and forming rapid standardization. In this solution, by using the voiceprint vector embedding, the voiceprint representation vector configured for representing the voiceprint characteristic of the specified object is inputted into the speech segmentation model to participate in attention calculation, allowing the speech segmentation model for additional training without relying on historical speech data of any object. This can eliminate the dependence on large-scale speech data of the object, making the system highly reusable and portable and improving the generality of the entire system. In addition, by improving the Unet network based on the attention mechanism, the inputted voiceprint representation vector can be calculated with the attention mechanism of each network layer in the Unet network, thereby ensuring that the feature map outputted by the speech segmentation model better matches the voiceprint characteristic represented by the voiceprint representation vector of the specified object, avoiding excessive noise in the extracted speech signal of the specified object, improving the cleanliness of the speech signal, and improving the segmentation accuracy of the speech segmentation model.

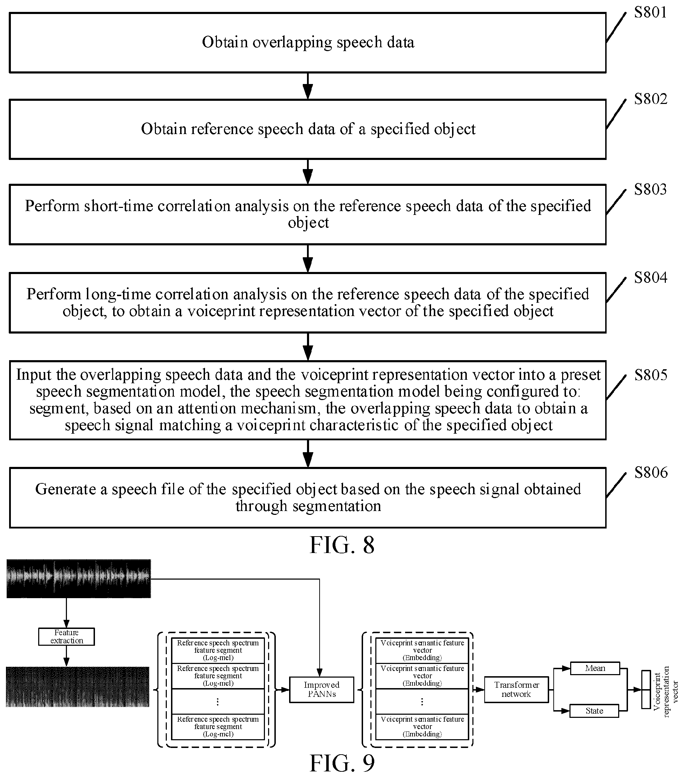

FIG. 8 is a schematic flowchart of another speech processing method according to an exemplary embodiment of this application. The speech processing method may be performed by the computer device in the system described above. For example, the computer device is a terminal and/or a server. The speech processing method may include, but is not limited to, operations S801 to S806.

S801: Obtain to-be-segmented mixed speech data.

S802: Obtain reference speech data of a specified object in at least two objects.

For a specific implementation process shown in operations S801 and S802, reference may be made to the related descriptions of the specific implementation process shown in operations S301 and S302 in the embodiment shown in FIG. 3. Details are not described herein again.

S803: Perform short-time correlation analysis on the reference speech data of the specified object.

S804: Perform long-time correlation analysis on the reference speech data of the specified object, to obtain a voiceprint representation vector of the specified object.

In operations S803 and S804, to learn a relatively clear voiceprint characteristic of the specified object from the reference speech data of the specified object, this embodiment of this application supports the analysis on the reference speech data in combination with short-time correlation and long-time correlation, to extract a voiceprint representation vector that can fully express the voiceprint characteristic of the specified object. The short-time correlation analysis on the reference speech data may be simply understood as: a process of performing feature analysis on a short (for example, 20 milliseconds) speech signal in the reference speech data. Considering that within a short time, a speech signal in the reference speech data usually does not change, after the reference speech data is discretized, information distribution of each short speech signal in a time domain and a frequency domain may be used to extract a feature of the speech signal within the short time, thereby implementing feature analysis of each speech signal in the reference speech data. In short, the short-time correlation analysis focuses on performing feature analysis on a segmented speech signal in the reference speech data. A difference lies in that the long-time correlation analysis on the reference speech data may be simply understood as: a process of performing feature analysis on the entire reference speech data. In other words, the long-time correlation analysis focuses on performing semantic expression on an entire signal sequence of the reference speech data.

The short-time correlation analysis and the long-time correlation analysis mentioned above are mainly implemented by relying on the voiceprint vector extraction model in the system shown in FIG. 1. As described above, the voiceprint vector extraction model includes improved pretrained audio neural networks (PANNs) and a transformer network. The improved pretrained audio neural networks (PANNs) may be referred to as improved PANNs for short, and is mainly configured for performing short-time correlation analysis on reference speech data. The transformer network is mainly configured for performing long-time correlation analysis on reference speech data.

For an exemplary schematic diagram of performing short-time correlation analysis and long-time correlation analysis on reference speech data using improved PANNs and a transformer network, reference may be made to FIG. 9. As shown in FIG. 9, first, the reference speech data is converted from a time domain to a frequency domain, to obtain a reference speech spectrum feature corresponding to the reference speech data. For a conversion formula of conversion from the time domain to the frequency domain, reference may be made to the foregoing related descriptions. Details are not described herein again. Then, to implement the short-time correlation analysis, segmentation processing may be further performed on the reference speech spectrum feature, to obtain a reference speech spectrum feature segment corresponding to each speech data segment. The reference speech spectrum feature segment in this embodiment of this application may be a logarithmic Mel-spectrum (Log-mel or Logmel). A Mel-spectrum is a nonlinear frequency scale determined based on the human ear's perceptual judgment of equidistant pitch changes (that is, frequency bands are equidistantly distributed on the Mel scale), where pitch refers to the highness and lowness of a sound; and can be artificially set to better align with the changes in the human ear's auditory perception during signal processing.

Then, in a segmented input manner, a reference speech spectrum feature segment corresponding to each speech data segment is inputted into the improved PANNs, and complete reference speech data is inputted into the improved PANNs. In this way, the improved PANNs can perform segmentation processing on the received reference speech data according to a segmentation rule followed by the segmentation processing on the reference speech spectrum feature, to obtain the plurality of speech data segments corresponding to the reference speech data. In addition, the improved PANNs perform short-time correlation analysis on each speech data segment based on each speech data segment and the corresponding reference speech spectrum feature segment, to obtain the voiceprint semantic feature vector corresponding to each speech data segment. The voiceprint semantic feature vector is configured for representing a semantic characteristic of the corresponding speech data segment.

Finally, a vector sequence (or referred to as a voiceprint semantic feature vector sequence) formed by the voiceprint semantic feature vector corresponding to each speech data segment is inputted into the transformer network. In this way, the transformer network can perform long-time correlation analysis on the voiceprint semantic feature vector sequence, to obtain the voiceprint representation vector of the specified object. The voiceprint semantic feature vector sequence herein includes the voiceprint semantic feature vector corresponding to each speech data segment. The transformer network is used as a sequence network, an input of the transformer network is an entire vector sequence, and an output of the transformer network is also a sequence (that is, the voiceprint representation vector of the specified object is a sequence). After the transformer network outputs a sequence, the last vector in the sequence may be referred to as a state, and the state includes semantic fusion of the entire sequence. In this way, a mean of the entire sequence outputted by the transformer network may be obtained, and a mean result and the state are superposed, to generate a voiceprint representation vector in which semantic features expressed by the entire sequence are integrated. The foregoing manner of obtaining the voiceprint representation vector by integrating the speech feature represented by the mean result of the sequence outputted by the transformer network and the speech feature represented by the entire sequence can effectively ensure that the voiceprint representation vector can fully represent the voiceprint characteristic of the specified object, thereby ensuring the accuracy of voiceprint characteristic extraction.

Based on the foregoing overall descriptions of the voiceprint vector extraction model including the improved PANNs and the transformer network, the following respectively describes structures and procedures of the improved PANNs and the transformer network.

### (1) Improved PANNs.

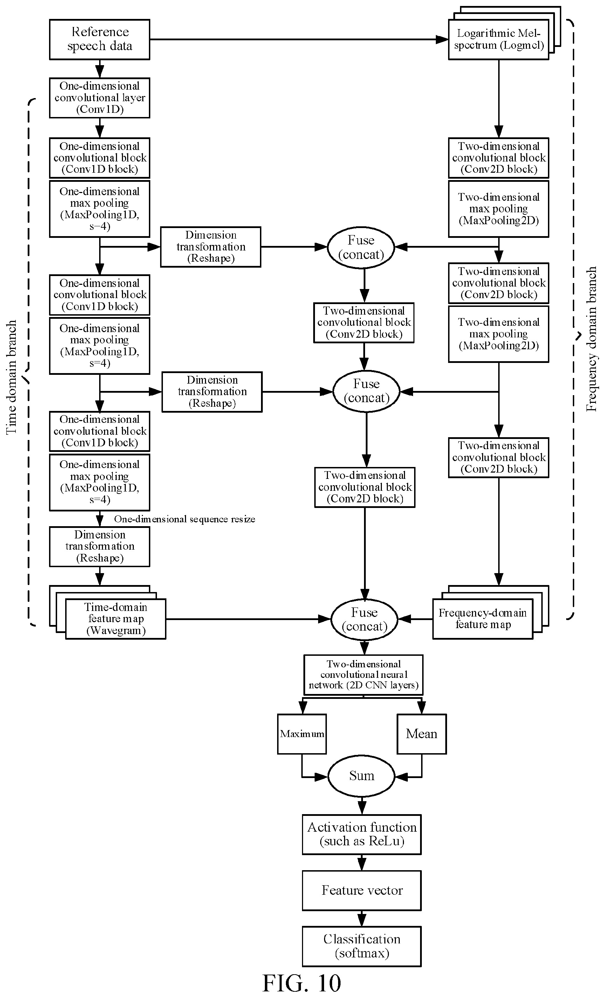

For an exemplary schematic structural diagram of the improved PANNs, reference may be made to FIG. 10. As shown in FIG. 10, input information of the improved PANNs is reference speech data. In other words, an original speech sampling point sequence, that is, an original sequence of an audio signal, is inputted to the improved PANNs. The improved PANNs may be divided into two branches, which are a time domain branch (or referred to as a time domain processing branch) and a frequency domain branch (or referred to as a frequency domain processing branch). Input information of the time domain branch is reference speech data, and input information of the frequency domain branch is a reference speech spectrum feature corresponding to the reference speech data. The reference speech spectrum feature is obtained by converting a time domain signal "reference speech data" from the time domain to the frequency domain. Further, it can be known from the foregoing descriptions that, to fully extract and represent the voiceprint characteristic of the specified object, the improved PANNs focus on performing short-time correlation analysis on the reference speech data, that is, supporting processing using the improved PANNs in a segmented input manner. Specifically, the improved PANNs process only one segment of speech data in the reference speech data and the reference speech spectrum feature corresponding to the speech data each time.

In other words, input information inputted into the time domain branch each time is a segment of speech data in the reference speech data. Similarly, input information inputted into the frequency domain branch each time is a reference speech spectrum feature segment in the frequency domain corresponding to a segment of speech data in the reference speech data. After the reference speech data is inputted into the improved PANNs, the reference speech data may be converted from the time domain to the frequency domain, to obtain the reference speech spectrum feature corresponding to the reference speech data, and segmentation processing is performed on the reference speech spectrum feature, to obtain the reference speech spectrum feature segment corresponding to each speech data segment. Segmentation processing is performed on the reference speech data, to obtain the plurality of speech data segments corresponding to the reference speech data. A segmentation rule followed by segmentation processing on the reference speech data is the same as the segmentation rule followed by segmentation processing on the reference speech spectrum feature. For example, the segmentation rule may include: during the segmentation processing on the reference speech data, speech data with a duration of 20 milliseconds is periodically captured as one segment. Therefore, during the segmentation processing on the reference speech spectrum feature, each speech data segment corresponding to the reference speech spectrum feature segment, after being converted to the time domain, has a duration of 20 milliseconds. This manner in which time-domain segmentation corresponds to frequency-domain segmentation ensures the accuracy of each characteristic analysis.

Still referring to FIG. 10, in a case of segmented input, the improved PANNs may perform short-time correlation analysis on each speech data segment based on each speech data segment and the corresponding reference speech spectrum feature segment, to obtain the voiceprint semantic feature vector corresponding to each speech data segment. The voiceprint semantic feature vector is configured for representing a semantic characteristic of a corresponding speech data segment. For ease of description, the specific process of the short-time correlation analysis described above is described using an example in which any speech data segment in the plurality of speech data segments is represented as a target speech data segment.
1. The time domain branch includes a plurality of one-dimensional convolutional layers (Conv1D) and max pooling layers (max pooling). Conv is an abbreviation of convolutional, and D is an abbreviation of dimension. A dimension of the max pooling layer is 1, a stride (s for short) is a one-dimensional vector, with a length of 4. As shown in FIG. 10, it is assumed that the time domain branch sequentially includes: a one-dimensional convolutional layer → a one-dimensional convolutional block (Conv1D block, including one or more one-dimensional convolutional layers) → a max pooling layer (whose dimension is 1 and stride s is 4) → a one-dimensional convolutional block → a max pooling layer → a one-dimensional convolutional block → a maximum pooling layer. Therefore, after the feature extraction is performed on the target speech data segment using the convolutional layer, and then, a max pooling layer adjacent to the convolutional layer performs feature selection on the feature map obtained after the feature extraction, facilitating further extracting a feature to be focused on from the feature map. A plurality of feature extractions may be performed on the reference speech data (specifically, the target speech data segment) in a layer-by-layer manner between a plurality of one-dimensional convolutional layers and max pooling layers, to obtain a one-dimensional sequence (resizing), and a plurality of two-dimensional time domain feature maps (or referred to as two-dimensional graphs, wavegrams) are obtained through dimension transformation (reshaping) of the one-dimensional sequence. The time domain feature map is a graphical representation that describes changes with time of a reference speech signal in reference speech data in a time domain, and can intuitively display basic features of the reference speech signal (such as a periodicity, a frequency component, and a phase relationship of the reference speech signal). An objective of the dimension conversion herein is to enable a converted time domain feature map to be fused with a frequency domain feature map outputted by the frequency domain branch. In the foregoing process, by using a large quantity of one-dimensional convolutional layers in the time domain branch, when the feature extraction is performed on the reference speech data using the time domain branch, a time domain characteristic (such as information such as audio loudness and sampling point amplitude) of a speech signal in the reference speech data can be directly learned.
2. The frequency domain branch includes a plurality of two-dimensional convolutional layers (Conv2D) and max pooling layers (max pooling). A dimension of the max pooling layer in the frequency domain branch is 2. As shown in FIG. 10, it is assumed that the frequency domain branch sequentially includes: a two-dimensional convolutional block (including one or more two-dimensional convolutional layers) → a max pooling layer (whose dimension is 2) → a two-dimensional convolutional block → a max pooling layer → a two-dimensional convolutional block. By using the plurality of two-dimensional convolutional layers and the max pooling layers, the feature extraction may be performed on a reference speech spectrum feature segment (Logmel) corresponding to the target speech data segment, to obtain a plurality of frequency domain feature maps. The frequency domain feature map is a graphical representation that describes a frequency component of a reference speech signal in reference speech data in a frequency domain, and may display various frequency components included in the reference speech signal and corresponding amplitudes or strengths thereof. A feature dimension of the frequency domain feature map herein is the same as a feature dimension of the time domain feature map outputted by the time domain branch. In the foregoing process, using a large quantity of two-dimensional convolutional layers in the frequency domain branch, when the feature extraction is performed on the reference speech spectrum feature segment using the frequency domain branch, a frequency domain characteristic of the speech signal in the reference speech data can be directly learned.
3. After the time domain feature map outputted by the time domain branch and the frequency domain feature map outputted by the frequency domain branch are obtained based on the foregoing operations, fusion processing may be performed on the time domain feature map and the frequency domain feature map, to generate the voiceprint semantic feature vector corresponding to the target speech data segment. Specifically, as shown in FIG. 10, a plurality of information exchanges between the time domain and the frequency domain are further performed between the time domain branch and the frequency domain branch. The information exchanges are: dimension transformation (reshaping) is performed on an information feature of the time domain branch, and then the information feature of the time domain branch and a feature of the frequency domain branch are fused (concat). A fusion result is convolved by the two-dimensional convolution block (Conv2D block), and is then inputted to a fusion module at a higher layer for fusion. Considering that an association of reference speech data in time sequence can be obtained in time domain processing, and an association of reference speech data at different frequencies can be obtained in frequency domain processing, the two associations belong to different fields. Through the information exchange between the foregoing two domains (namely, the time domain and the frequency domain), the time domain and the frequency domain can maintain complementary information, allowing a higher-level network to perceive information from a lower-level network, thereby achieving full learning of the reference speech data.

Based on this, assuming that a quantity of feature extractions on the time domain branch and the frequency domain branch is k, where k is an integer greater than 1, and any one feature extraction is denoted as an i^{th} feature extraction, the foregoing mentioned fusion between the time domain feature map outputted by the time domain branch and the frequency domain feature map outputted by the frequency domain branch may specifically include the following. First, when i=1 (that is, during the first feature extraction), fusion processing is performed on an intermediate time domain feature map obtained by the time domain branch through the first feature extraction and an intermediate frequency domain feature map obtained by the frequency domain branch through the first feature extraction, to generate a first intermediate feature vector obtained through the first feature extraction. Then, when 1<i≤k, fusion processing is performed on an intermediate time domain feature map obtained through an i^{th} feature extraction by the time domain branch, an intermediate frequency domain feature map obtained through an i^{th} feature extraction by the frequency domain branch, and an (i-1)^{th} intermediate feature vector obtained through the (i-1)^{th} feature extraction, to generate the i^{th} intermediate feature vector obtained through the i^{th} feature extraction. Finally, a voiceprint semantic feature vector corresponding to a target semantic data segment is generated based on a k^{th} intermediate feature vector obtained through a k^{th} feature extraction when i=k. A specific generation process herein may include: inputting the k^{th} intermediate feature vector into a two-dimensional convolutional neural network (2D CNN layers) for feature extraction to obtain a vector sequence, and performing an averaging operation using the vector sequence to obtain a mean and performing a maximum operation to obtain a maximum (max), and then summing the mean and the maximum to obtain a feature vector after passing through one layer of activation function (ReLu), and normalizing the feature vector using a normalization function (softmax), to convert the feature vector into a voiceprint semantic feature vector representing a probability distribution, that is, the voiceprint semantic feature vector corresponding to the target speech data segment.

In conclusion, the entire reference speech data is framed, and the frames are inputted into the improved PANNs. The improved PANNs select the last vector of an entire sequence to be fused with a mean of the entire sequence, to generate a final voiceprint representation vector, so that a multi-band semantic feature vector sequence (including a voiceprint semantic feature vector corresponding to each speech data segment) representing the entire reference speech data can be obtained. Through the improved PANNs, short-time correlation analysis can be implemented for the reference speech data, voiceprint characteristics of segmented speech signals in the reference speech data are fully learned, and the extracted voiceprint representation vector can fully express voiceprint information of the specified object.

### (2) Transformer network.

It is considered that the improved PANNs focus on short-time correlation, that is, features are calculated according to segments. Therefore, to sufficiently learn the voiceprint characteristic of the specified object from the reference speech data, the transformer network is further introduced in this embodiment of this application to learn long-time association information of the reference speech data. An attention mechanism owned by the transform network can better focus on a voiceprint characteristic of reference language data about the specified object, and better implement extraction of global feature information of the reference language data.

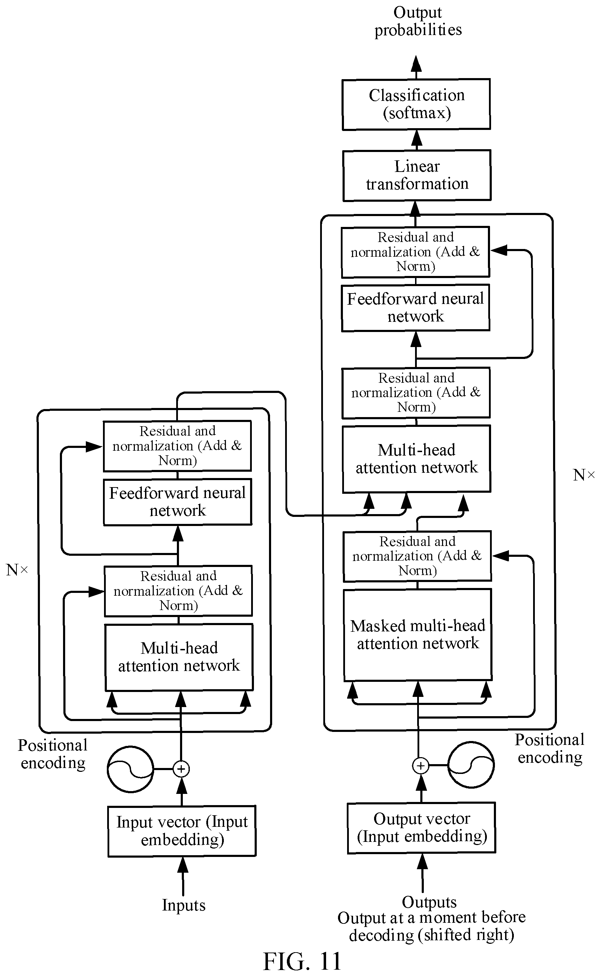

For example, for a network structure schematic diagram of the transformer network, reference may be made to FIG. 11. As shown in FIG. 11, the transformer network uses an encoder-decoder architecture. Both an encoder side and a decoder side are formed by stacking N encoder layers (namely, "N×" in FIG. 11). The encoder layer mainly includes two sublayers. The first sublayer includes a multi-head attention mechanism, and residual and normalization (Add & Norm). The second sublayer includes a feedforward neural network, and a residual and normalization layer. The multi-head attention mechanism included in the first sublayer can help obtain context semantics of the voiceprint semantic feature vector corresponding to the speech data segment. The decoder layer mainly includes three sublayers. The first sublayer includes a masked multi-head attention mechanism, and a residual and normalization layer, the second sublayer includes a multi-head attention mechanism, and a residual and normalization (Add & Norm) layer, and the third sublayer includes a feedforward neural network, and a residual and normalization layer. By using the three-layer structure, the decoder layer can help obtain key content that needs to be focused on.

During specific implementation, input information on the encoder side in the transformer network is a voiceprint semantic feature vector sequence (input embedding) outputted by the improved PANNs. The voiceprint semantic feature vector sequence includes a voiceprint semantic feature vector corresponding to each semantic data segment. Then, positional encoding is performed on the inputted voiceprint semantic feature vector sequence, to preprocess the voiceprint semantic feature vector sequence. The positional encoding is a method of re-expressing each word in a vector sequence using positional information of the word, allowing data inputted to the encoder side to carry the positional information of the word. Further, data obtained after the positional encoding is inputted into the encoder side, and the inputted data is encoded by each layer on the encoder side (as the foregoing related descriptions for the structure on the encoder side), to obtain an encoding result. Then, after obtaining the encoding result outputted by the encoder side, the decoder side supports combining the encoding result and an output feature of the decoder side at a previous moment (shifted right), as input data of the decoder side at the current moment, and the decoder side decodes the input data. Finally, linear transformation (Linear) and classification (softmax) are performed on an output feature of the decoder side, to obtain a voiceprint representation vector of the specified object (output probabilities). Through the foregoing process, the voiceprint semantic feature vector sequence may be calculated using the transformer network, so that long-time semantic expression of the entire voiceprint semantic feature vector sequence for the entire reference speech data can be clearer. That is, the finally outputted voiceprint representation vector can fully and clearly express the voiceprint characteristic of the specified object.

S805: Input the mixed speech data and the voiceprint representation vector into a preset speech segmentation model, the speech segmentation model being configured to: segment, based on an attention mechanism, the mixed speech data to obtain a target speech signal matching the voiceprint characteristic of the specified object.

For a specific implementation process shown in operation S805, reference may be made to the related descriptions of the specific implementation process of segmenting, based on the attention mechanism, the mixed speech data to obtain the speech signal matching the voiceprint characteristic of the specified object in operation S303 in the embodiment shown in FIG. 3. Details are not described herein again.

It can be known from related descriptions shown in operation S302 that, in this embodiment of this application, the improved Unet network (namely, a speech segmentation network) is mainly used to segment the mixed speech data based on the attention mechanism, to obtain the speech signal matching the voiceprint characteristic of the specified object. In addition, in the speech segmentation network, the attention mechanism is mainly integrated into a conventional Unet network. For example, an attention mechanism is added to each network layer in the conventional Unet network to improve the conventional Unet network. Considering that a large quantity of attention mechanisms may be introduced into a speech segmentation system, causing a large parameter quantity in the entire model, this embodiment of this application further supports performing model distillation on the speech segmentation model integrated with the attention mechanism, to obtain a speech segmentation model after the model distillation. In this way, the correlation calculation mentioned above may be implemented using the speech segmentation model after model distillation, thereby reducing the scale of the entire system and reducing the overall parameter quantity and time consumption. Both the voiceprint representation vector and the speech spectrum feature are represented in a vector form. Therefore, a manner of calculating a correlation between the voiceprint representation vector and the speech spectrum feature using the speech segmentation model after the model distillation may include, but is not limited to, a dot product manner. The correlation between the voiceprint representation vector and the speech spectrum feature is calculated in a dot product manner, including: a product of a product of a modulus of the voiceprint representation vector and a modulus of the speech spectrum feature, and a cosine value of an angle between the voiceprint representation vector and the speech spectrum feature. For example, if the voiceprint representation vector is a̅, the speech spectrum feature is b̅, an angle between the voiceprint representation vector and the speech spectrum feature is θ, a dot product of the voiceprint representation vector and the speech spectrum feature is |a̅||b̅|cosθ. The dot product result is used as a similarity between the voiceprint representation vector and the speech spectrum feature. The model distillation is a method of learning a large model (teacher model) having a large parameter quantity to obtain a more compact small model (student model) having a small parameter quantity. Model distillation for the speech segmentation model is model distillation mainly implemented for a large model using technologies such as pruning and knowledge distillation. The pruning, referred to as model pruning, is a model compression technology, aiming to reduce the complexity of a speech segmentation model, improve the inference speed of the speech segmentation model, and reduce the storage requirement of the speech segmentation model by deleting some unimportant parameters or structures in the speech segmentation model. The knowledge distillation may be understood as using a relatively complex speech segmentation model as a teacher model, training a student model with a small parameter quantity and a simple structure, and in a training process, the student model learns and imitates an output of the teacher model, so that the trained student model has an advantage of a small calculation amount, and has model performance same as that of the teacher model. In this embodiment of this application, the trained learning model is a speech segmentation model after knowledge increment. The model pruning and the knowledge distillation mentioned above are main implementation technologies of the model distillation, but the model distillation may further include other technologies. A specific implementation of the model distillation is not limited in this embodiment of this application.

S806: Generate a speech file of the specified object based on the target speech signal obtained through segmentation.

For a specific implementation process shown in operation S806, reference may be made to the related descriptions of the specific implementation process shown in operation S304 in the embodiment shown in FIG. 3. Details are not described herein again.

In conclusion, an embodiment of this application provides a speech segmentation method of a reusable specified object with voiceprint vector embedding. In the method, a voiceprint vector extraction model formed by improved PANNs and a transformer network is used to perform voiceprint extraction on a small segment of reference speech data of a specified object. By combining short-time correlation analysis of the improved PANNs and long-time correlation analysis of the transformer network, an extracted voiceprint representation vector of the specified object can more fully and clearly express a voiceprint characteristic of the specified object. In addition, in this embodiment of this application, the attention mechanism is further integrated into a Unet network, so that the Unet network (namely, the speech segmentation model) integrated with the attention mechanism implements segmentation of mixed speech data based on the attention mechanism, and can more clearly and accurately calculate and extract a speech signal of the specified object in the mixed speech data, thereby ensuring the cleanliness of the extracted speech signal, and achieving a more accurate and cleaner speech separation effect. In addition, in this embodiment of this application, the mixed speech data can be segmented to obtain the speech signal of the specified object by obtaining only the reference speech data of the specified object. If speech data of another object is to be obtained, it is only necessary to replace the voiceprint characteristic of the object for segmentation, without the need to train a dedicated network for each object, enabling the network to be easily portable, and providing this solution with high generality.

The method in the embodiments of this application is described in detail above. For ease of better implementing the foregoing solution in the embodiments of this application, an apparatus in an embodiment of this application is correspondingly provided below.

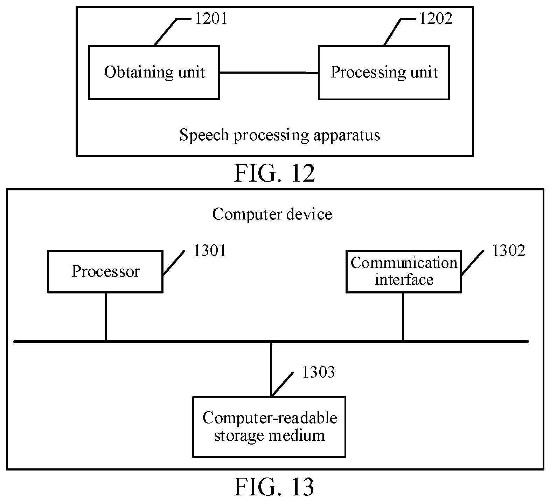

FIG. 12 is a schematic structural diagram of a speech processing apparatus according to an exemplary embodiment of this application. The speech processing apparatus may be configured to perform some or all operations in the method embodiments shown in FIG. 3 or FIG. 8. Referring to FIG. 12, the speech processing apparatus includes the following units:
an obtaining unit 1201, configured to obtain mixed speech data, the mixed speech data corresponding to speech signals produced by at least two objects,
the obtaining unit 1201 being further configured to obtain reference speech data of a pre-determined being one of the at least two objects; and the reference speech data corresponding to a reference speech signal of the pre-determined object; and
a processing unit 1202, configured to extract a voiceprint representation vector of the pre-determined object from the reference speech data, the voiceprint representation vector being configured to represent a voiceprint characteristic of the pre-determined object,
the processing unit 1202 being further configured to input the mixed speech data and the voiceprint representation vector into a preset speech segmentation model, the speech segmentation model being configured to: segment, based on an attention mechanism, the mixed speech data to obtain a target speech signal matching the voiceprint characteristic; and
the processing unit 1202 being further configured to generate a speech file of the pre-determined object based on the target speech signal obtained through segmentation.

In an implementation, a process of segmenting, based on an attention mechanism, the mixed speech data to obtain a target speech signal matching the voiceprint characteristic includes:
converting the mixed speech data from a time domain to a frequency domain, to obtain a speech spectrum feature corresponding to the mixed speech data, the speech spectrum feature being a feature presentation of the mixed speech data in the frequency domain;
performing correlation calculation on the voiceprint representation vector and the speech spectrum feature based on the attention mechanism, to obtain a speech spectrum feature segment matching the voiceprint characteristic, the speech spectrum feature segment being a segment in the speech spectrum feature that matches the voiceprint characteristic; and
converting the speech spectrum feature segment from the frequency domain to the time domain, to obtain the target speech signal matching the voiceprint characteristic.

In an implementation, the correlation calculation is implemented through a speech segmentation model; and the speech segmentation model includes a feature extraction subnetwork and an upsampling subnetwork, and the feature extraction subnetwork and the upsampling subnetwork are connected by a convolutional connection layer;
the feature extraction subnetwork and the upsampling subnetwork have symmetry; the feature extraction subnetwork includes m convolutional layers hierarchically distributed, and the upsampling subnetwork includes an upsampling layer corresponding to each convolutional layer in the m convolutional layers, m being a positive integer; and the convolutional layer, the convolutional connection layer, and the upsampling layer each include a plurality of convolutional networks sequentially connected.
the attention mechanism being integrated in all or some of network layers in the speech segmentation model, and an integration position of the attention mechanism in the plurality of convolutional networks included in the network layer being not fixed; and the network layers including the convolutional layer, the upsampling layer, and the convolutional connection layer.

In an implementation, the attention mechanism is integrated in each network layer in the speech segmentation model. When configured to perform correlation calculation on the voiceprint representation vector and the speech spectrum feature based on the attention mechanism, to obtain a speech spectrum feature segment matching the voiceprint characteristic, the processing unit 1202 is specifically configured to:
input the voiceprint representation vector into each network layer in the speech segmentation model;
perform, based on the attention mechanism integrated in each network layer, correlation calculation on the voiceprint representation vector and a first feature map of the corresponding network layer, to obtain a second feature map outputted by the corresponding network layer, a voiceprint characteristic represented by the second feature map matching a voiceprint characteristic represented by the voiceprint representation vector; and
determine a second feature map outputted by a (2m+1)^{th} network layer in the speech segmentation model as a speech spectrum feature segment matching the voiceprint characteristic represented by the voiceprint representation vector, the (2m+1)^{th} network layer in the speech segmentation model being the last upsampling layer in the upsampling subnetwork.

In an implementation, any network layer integrated with the attention mechanism in the speech segmentation model is represented as a target network layer; the target network layer is the convolutional layer or the convolutional connection layer. an integration position of the attention mechanism in the target network layer is: a position between the first convolutional network and the second convolutional network adjacent to the first convolutional network in the plurality of sequentially connected convolutional networks included in the target network layer; and
when configured to perform, based on the attention mechanism integrated in each network layer, correlation calculation on the voiceprint representation vector and a first feature map of the corresponding network layer, to obtain a second feature map outputted by the corresponding network layer, the processing unit 1202 is specifically configured to:
perform feature extraction on a first feature map of the target network layer using the first convolutional network in the target network layer, to obtain a third feature map of the target network layer, when the target network layer is the first convolutional layer in the hierarchical distribution of the feature extraction subnetwork, the first feature map of the target network layer being the speech spectrum feature; and when the target network layer is another convolutional layer in the speech segmentation model other than the first convolutional layer, the first feature map of the target network layer being obtained through pooling processing on a feature map outputted by a previous-level network layer adjacent to the target network layer;
perform correlation calculation on the voiceprint representation vector and the third feature map of the target network layer according to the attention mechanism integrated in the target network layer, to obtain a fourth feature map of the target network layer, a feature dimension of the third feature map being the same as a feature dimension of the fourth feature map; and
perform feature extraction on the fourth feature map using another convolutional network in the target network layer other than the first convolutional network, to obtain the second feature map outputted by the target network layer.

In an implementation, any network layer integrated with the attention mechanism in the speech segmentation model is represented as a target network layer; the target network layer is the upsampling layer; an integration position of the attention mechanism in the plurality of convolutional networks corresponding to the target network layer is: a position after the last convolutional network in the plurality of sequentially connected convolutional networks in the target network layer; and
when configured to perform, based on the attention mechanism integrated in each network layer, correlation calculation on the voiceprint representation vector and a first feature map of the corresponding network layer, to obtain a second feature map outputted by the corresponding network layer, the processing unit 1202 is specifically configured to:
perform feature extraction on a target feature map using the plurality of sequentially connected convolutional networks in the target network layer, to obtain a first feature map of the target network layer, the target feature map being obtained by performing feature concatenation on a feature map outputted by a corresponding convolutional layer of the target network layer in the feature extraction subnetwork and a feature map outputted by the previous-level network layer of the target network layer; and
perform correlation calculation on the voiceprint representation vector and the first feature map of the target network layer using the attention mechanism integrated in the target network layer, to obtain a second feature map outputted by the target network layer, a feature dimension of the second feature map being the same as a feature dimension of the first feature map.

In an implementation, the processing unit 1202 is further configured to:
perform dimension transformation on the voiceprint representation vector, to obtain a voiceprint representation vector after dimension transformation,
a feature dimension of the voiceprint representation vector after dimension transformation being the same as a feature dimension of a feature map to be inputted into the attention mechanism integrated in the corresponding network layer.

In an implementation, if a quantity of network layers integrated with the attention mechanism in the speech segmentation model is greater than a quantity threshold, the processing unit 1202 is further configured to:
perform model distillation on the speech segmentation model, to obtain a speech segmentation model after model distillation,
the correlation calculation being implemented by the speech segmentation model after model distillation.

In an implementation, when configured to extract a voiceprint representation vector of the specified object from the reference speech data, the processing unit 1202 is specifically configured to:
perform segmentation processing on the reference speech data, to obtain a plurality of speech data segments corresponding to the reference speech data;
convert the reference speech data from the time domain to the frequency domain, to obtain a reference speech spectrum feature corresponding to the reference speech data;
perform segmentation processing on the reference speech spectrum feature, to obtain a reference speech spectrum feature segment corresponding to each speech data segment;
perform short-time correlation analysis on each speech data segment based on the speech data segment and a reference speech spectrum feature segment corresponding to the speech data segment, to obtain a voiceprint semantic feature vector corresponding to the speech data segment, the voiceprint semantic feature vector being configured for representing a semantic characteristic of the speech data segment; and
perform long-time correlation analysis on a voiceprint semantic feature vector sequence, to obtain a voiceprint representation vector of the specified object, the voiceprint semantic feature vector sequence including a voiceprint semantic feature vector corresponding to each speech data segment.

In an implementation, any speech data segment in the plurality of speech data segments is represented as a target speech data segment; and when configured to perform short-time correlation analysis on each speech data segment based on the speech data segment and a reference speech spectrum feature segment corresponding to the speech data segment, to obtain a voiceprint semantic feature vector corresponding to the speech data segment, the processing unit 1202 is specifically configured to:
perform feature extraction on the target speech data segment, to obtain a time domain feature map;
perform feature extraction on a reference speech spectrum feature segment corresponding to the target speech data segment, to obtain a frequency domain feature map; and
perform fusion processing on the time domain feature map and the frequency domain feature map, to generate a voiceprint semantic feature vector corresponding to the target speech data segment.

In an implementation, a quantity of times of the feature extraction is k, k being an integer greater than 1; any feature extraction is represented as an i^{th} feature extraction; and when configured to perform fusion processing on the time domain feature map and the frequency domain feature map, to generate a voiceprint semantic feature vector corresponding to the target speech data segment, the processing unit 1202 is specifically configured to:
when i=1, perform fusion processing on an intermediate time domain feature map and an intermediate frequency domain feature map that are obtained through the first feature extraction, to generate a first intermediate feature vector obtained through the first feature extraction;
when 1<i≤k, perform fusion processing on an intermediate time domain feature map and an intermediate frequency domain feature map obtained through the i^{th} feature extraction and an (i-1)^{th} intermediate feature vector obtained through the (i-1)^{th} feature extraction, to generate an i^{th} intermediate feature vector obtained through the i^{th} feature extraction; or
when i=k, generate the voiceprint semantic feature vector corresponding to the target speech data segment based on a k^{th} intermediate feature vector obtained through the k^{th} feature extraction.

According to an embodiment of this application, units of the speech processing apparatus shown in FIG. 12 may be respectively or wholly combined into one or a plurality of other units, or one (or more) of the units here may further be divided into the plurality of units of smaller functions. In this way, same operations can be implemented, and implementation of the technical effects of embodiments of this application is not affected. The units are divided based on logical functions. In actual applications, a function of one unit may be implemented by a plurality of units, or functions of a plurality of units may be implemented by one unit. In another embodiment of this application, the speech processing apparatus may also include another unit. In actual applications, these functions may alternatively be cooperatively implemented by another unit and may be cooperatively implemented by a plurality of units. According to another embodiment of this application, the speech processing apparatus shown in FIG. 12 may be constructed and the speech processing method in the embodiments of this application may be implemented by running a computer program (including program code) that can perform the operations related to the corresponding methods shown in FIG. 3 and FIG. 8 on processing elements and memory elements including a central processing unit (CPU), a random access memory (RAM), a read-only memory (ROM), and the like, for example, a generic computing device of a computer. The computer program may be recorded in, for example, a computer-readable recording medium, and may be loaded into the foregoing computing device using the computer-readable recording medium, and run in the computing device.

Based on the same inventive concept, the principles and beneficial effects for resolving problems in the speech processing apparatus provided in the embodiments of this application are similar to the principles and beneficial effects for resolving problems in the speech processing method in the method embodiments of this application. Reference may be made to the principles and the beneficial effects of the implementation of the method. For brevity, details are not described herein again.

FIG. 13 is a schematic structural diagram of a computer device according to an exemplary embodiment of this application. With reference to FIG. 13, the computer device includes a processor 1301, a communication interface 1302, and a computer-readable storage medium 1303. The processor 1301, the communication interface 1302, and the computer-readable storage medium 1303 may be connected using a bus or in other manners. The communication interface 1302 is configured to send and receive data. The computer-readable storage medium 1303 may be stored in a memory in the computer device. The computer-readable storage medium 1303 is configured to store a computer program. The processor 1301 is configured to execute the computer program stored in the computer-readable storage medium 1303. The processor 1301 (or referred to as a central processing unit (CPU)) is a computing core and a control core of the computer device, and is suitable for implementing one or more computer programs, and is specifically suitable for loading and executing one or more computer programs to implement corresponding method procedures or corresponding functions.

An embodiment of this application further provides a computer-readable storage medium (memory). The computer-readable storage medium is a memory device in a computer device, and is configured to store a program and data. The computer-readable storage medium herein may include both a storage medium built in the computer device, and may certainly include an extended storage medium supported by the computer device. The computer-readable storage medium provides storage space. The storage space stores a processing system of the computer device. In addition, one or more computer programs that are adapted to be loaded and executed by the processor 1301 are also stored in the storage space. The computer-readable storage medium herein may be a high-speed RAM memory, or may be a non-volatile memory, for example, at least one magnetic disk memory. In some embodiments, the computer-readable storage medium herein may alternatively be at least one computer-readable storage medium located away from the processor.

In an embodiment, the computer device may be the terminal or the server described in the above embodiments. The computer-readable storage medium has one or more computer programs stored therein. The one or more computer programs stored in the computer-readable storage medium are loaded and executed by the processor 1301 to implement the corresponding operations in the embodiments of the speech processing method described above. In specific implementations, the one or more computer programs in the computer-readable storage medium are loaded and executed by the processor 1301 to perform the operations in the embodiments of this application. For the steps in the embodiments of this application, reference may be made to related descriptions in the foregoing embodiments. Details are not described herein again.

Based on the same inventive concept, the problem-solving principle and the beneficial effects of the computer device provided in this embodiment of this application are similar to those of the speech processing method in the method embodiments of this application. Reference may be made to the principles and the beneficial effects of the implementation of the method. For brevity, details are not described herein again.

An embodiment of this application further provides a computer program product. The computer program product includes a computer program. The computer program, when executed by a processor, implements the speech processing method described above.

A person of ordinary skill in the art may notice that the exemplary units and algorithm steps described with reference to the embodiments disclosed in this application can be implemented in electronic hardware, or a combination of computer software and electronic hardware. Whether the functions are executed by hardware or software depends on particular applications and design constraint conditions of the technical solutions. A person skilled in the art may use different methods to implement the described functions for each particular application, but it is not to be considered that the implementation goes beyond the scope of this application.

All or some of the embodiments may be implemented using software, hardware, firmware or any combination thereof. When the software is used for implementation, all or some of the embodiments may be implemented in a form of a computer program product. The computer program product includes one or more computer programs. When the computer program is loaded and executed on a computer device, the computer program performs the procedures or functions in the embodiments of this application. The computer device may be a general-purpose computer, a dedicated computer, a computer network, or other programmable devices. The computer program may be stored in the computer-readable storage medium or transmitted through the computer-readable storage medium. The computer program may be transmitted from a website, a computer device, a server, or a data center to another website, a computer device, a server, or a data center in a wired (for example, a coaxial cable, an optical fiber, or a digital subscriber line (DSL)) or wireless (for example, infrared, radio, or microwave) manner. The computer-readable storage medium may be any usable medium accessible by a computer device, or a data storage device, such as a server or a data center, integrating one or more usable media. The usable medium may be a magnetic medium (for example, a soft disk, a hard disk, or a magnetic tape), an optical medium (for example, a DVD), a semiconductor medium (for example, a solid-state drive (SSD)), or the like.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of claims.

## Claims

1. A speech processing method, performed by a computer device, the method comprising:
obtaining mixed speech data, the mixed speech data corresponding to speech signals produced by at least two objects;
obtaining reference speech data of a pre-determined object being one of the at least two objects, and the reference speech data corresponding to a reference speech signal of the pre-determined object;
extracting a voiceprint representation vector of the pre-determined object from the reference speech data, the voiceprint representation vector being configured to represent a voiceprint characteristic of the pre-determined object;
inputting the mixed speech data and the voiceprint representation vector into a preset speech segmentation model, the speech segmentation model being configured to segment, based on an attention mechanism, the mixed speech data to obtain a target speech signal matching the voiceprint characteristic; and
the target speech signal being configured to generate a speech file of the pre-determined object.

2. The method according to claim 1, wherein a process of segmenting, based on an attention mechanism, the mixed speech data to obtain a target speech signal matching the voiceprint characteristic comprises:
converting the mixed speech data from a time domain to a frequency domain, to obtain a speech spectrum feature corresponding to the mixed speech data, the speech spectrum feature being a feature presentation of the mixed speech data in the frequency domain;
performing correlation calculation on the voiceprint representation vector and the speech spectrum feature based on the attention mechanism, to obtain a speech spectrum feature segment matching the voiceprint characteristic, the speech spectrum feature segment being a segment in the speech spectrum feature that matches the voiceprint characteristic; and
converting the speech spectrum feature segment from the frequency domain to the time domain, to obtain the target speech signal matching the voiceprint characteristic.

3. The method according to claim 1 or 2, wherein the correlation calculation is implemented through the speech segmentation model; and the speech segmentation model comprises a feature extraction subnetwork and an upsampling subnetwork, and the feature extraction subnetwork and the upsampling subnetwork are connected by a convolutional connection layer; and
the feature extraction subnetwork and the upsampling subnetwork have symmetry; the feature extraction subnetwork comprises m convolutional layers hierarchically distributed, and the upsampling subnetwork comprises an upsampling layer corresponding to each of the m convolutional layers, m being a positive integer; and the convolutional layer, the convolutional connection layer, and the upsampling layer each comprise a plurality of convolutional networks sequentially connected,
the attention mechanism being integrated in all or some of network layers in the speech segmentation model, and an integration position of the attention mechanism in the plurality of convolutional networks comprised in the network layers being not fixed; and the network layers comprising the convolutional layer, the upsampling layer, and the convolutional connection layer.

4. The method according to any one of claims 1 to 3, wherein the attention mechanism is integrated in each network layer in the speech segmentation model; and the performing correlation calculation on the voiceprint representation vector and the speech spectrum feature based on the attention mechanism, to obtain a speech spectrum feature segment matching the voiceprint characteristic comprises:
inputting the voiceprint representation vector into each network layer in the speech segmentation model;
performing, based on the attention mechanism integrated in each network layer, correlation calculation on the voiceprint representation vector and a first feature map of the corresponding network layer, to obtain a second feature map outputted by the corresponding network layer, a voiceprint characteristic represented by the second feature map matching a voiceprint characteristic represented by the voiceprint representation vector; and
determining a second feature map outputted by a (2m+1)^{th} network layer in the speech segmentation model as a speech spectrum feature segment matching the voiceprint characteristic represented by the voiceprint representation vector, the (2m+1)^{th} network layer being the last upsampling layer in the upsampling subnetwork.

5. The method according to any one of claims 1 to 4, wherein any network layer integrated with the attention mechanism in the speech segmentation model is represented as a target network layer; the target network layer is the convolutional layer or the convolutional connection layer; and an integration position of the attention mechanism in the target network layer is: a position between the first convolutional network and the second convolutional network adjacent to the first convolutional network in the plurality of sequentially connected convolutional networks comprised in the target network layer; and
the performing, based on the attention mechanism integrated in each network layer, correlation calculation on the voiceprint representation vector and a first feature map of the corresponding network layer, to obtain a second feature map outputted by the corresponding network layer comprises:
performing feature extraction on a first feature map of the target network layer using the first convolutional network in the target network layer, to obtain a third feature map of the target network layer, when the target network layer is the first convolutional layer in the hierarchical distribution of the feature extraction subnetwork, the first feature map of the target network layer being the speech spectrum feature; and when the target network layer is another convolutional layer in the speech segmentation model other than the first convolutional layer, the first feature map of the target network layer being obtained through pooling processing on a feature map outputted by a previous-level network layer adjacent to the target network layer;
performing correlation calculation on the voiceprint representation vector and the third feature map of the target network layer according to the attention mechanism integrated in the target network layer, to obtain a fourth feature map of the target network layer, a feature dimension of the third feature map being the same as a feature dimension of the fourth feature map; and
performing feature extraction on the fourth feature map using another convolutional network in the target network layer other than the first convolutional network, to obtain the second feature map outputted by the target network layer.

6. The method according to any one of claims 1 to 5, wherein any network layer integrated with the attention mechanism in the speech segmentation model is represented as a target network layer; the target network layer is the upsampling layer; and an integration position of the attention mechanism in the target network layer is: a position after the last convolutional network in the plurality of sequentially connected convolutional networks in the target network layer; and
the performing, based on the attention mechanism integrated in each network layer, correlation calculation on the voiceprint representation vector and a first feature map of the corresponding network layer, to obtain a second feature map outputted by the corresponding network layer comprises:
performing feature extraction on a target feature map using the plurality of sequentially connected convolutional networks in the target network layer, to obtain a first feature map of the target network layer, the target feature map being obtained by performing feature concatenation on a feature map outputted by a corresponding convolutional layer of the target network layer in the feature extraction subnetwork and a feature map outputted by a previous-level network layer of the target network layer; and
performing correlation calculation on the voiceprint representation vector and the first feature map of the target network layer using the attention mechanism integrated in the target network layer, to obtain a second feature map outputted by the target network layer, a feature dimension of the second feature map being the same as a feature dimension of the first feature map.

7. The method according to any one of claims 1 to 6, wherein before the performing, based on the attention mechanism integrated in each network layer, correlation calculation on the voiceprint representation vector and a first feature map of the corresponding network layer, to obtain a second feature map outputted by the corresponding network layer, the method further comprises:
performing dimension transformation on the voiceprint representation vector, to obtain a voiceprint representation vector after dimension transformation,
a feature dimension of the voiceprint representation vector after dimension transformation being the same as a feature dimension of a feature map to be inputted into the attention mechanism integrated in the corresponding network layer.

8. The method according to any one of claims 1 to 7, wherein if a quantity of network layers integrated with the attention mechanism in the speech segmentation model is greater than a quantity threshold, the method further comprises:
performing model distillation on the speech segmentation model, to obtain a speech segmentation model after model distillation,
the correlation calculation being implemented by the speech segmentation model after model distillation.

9. The method according to any one of claims 1 to 8, wherein the extracting a voiceprint representation vector of the pre-determined object from the reference speech data comprises:
performing segmentation processing on the reference speech data, to obtain a plurality of speech data segments corresponding to the reference speech data;
converting the reference speech data from the time domain to the frequency domain, to obtain a reference speech spectrum feature corresponding to the reference speech data;
performing segmentation processing on the reference speech spectrum feature, to obtain a reference speech spectrum feature segment corresponding to each speech data segment;
performing short-time correlation analysis on each speech data segment based on the speech data segment and a reference speech spectrum feature segment corresponding to the speech data segment, to obtain a voiceprint semantic feature vector corresponding to the speech data segment, the voiceprint semantic feature vector being configured for representing a semantic characteristic of the speech data segment; and
performing long-time correlation analysis on a voiceprint semantic feature vector sequence, to obtain a voiceprint representation vector of the pre-determined object, the voiceprint semantic feature vector sequence comprising a voiceprint semantic feature vector corresponding to each speech data segment.

10. The method according to any one of claims 1 to 9, wherein any one of the plurality of speech data segments is represented as a target speech data segment; and the performing short-time correlation analysis on each speech data segment based on the speech data segment and a reference speech spectrum feature segment corresponding to the speech data segment, to obtain a voiceprint semantic feature vector corresponding to the speech data segment comprises:
performing feature extraction on the target speech data segment, to obtain a time domain feature map;
performing feature extraction on a reference speech spectrum feature segment corresponding to the target speech data segment, to obtain a frequency domain feature map; and
performing fusion processing on the time domain feature map and the frequency domain feature map, to generate a voiceprint semantic feature vector corresponding to the target speech data segment.

11. The method according to any one of claims 1 to 10, wherein a quantity of times of the feature extraction is k, k being an integer greater than 1; any feature extraction is represented as an i^{th} feature extraction; and the performing fusion processing on the time domain feature map and the frequency domain feature map, to generate a voiceprint semantic feature vector corresponding to the target speech data segment comprises:
when i=1, performing fusion processing on an intermediate time domain feature map and an intermediate frequency domain feature map that are obtained through the first feature extraction, to generate a first intermediate feature vector obtained through the first feature extraction;
when 1<i≤k, performing fusion processing on an intermediate time domain feature map and an intermediate frequency domain feature map obtained through the i^{th} feature extraction and an (i-1)^{th} intermediate feature vector obtained through an (i-1)^{th} feature extraction, to generate an i^{th} intermediate feature vector obtained through the i^{th} feature extraction; or
when i=k, generating the voiceprint semantic feature vector corresponding to the target speech data segment based on a k^{th} intermediate feature vector obtained through a k^{th} feature extraction.

12. A speech processing apparatus, the apparatus being mounted on a computer device, comprising:
an obtaining unit, configured to obtain mixed speech data, the mixed speech data corresponding to speech signals produced by at least two objects;
the obtaining unit being further configured to obtain reference speech data of a pre-determined object being one of the at least two objects; and the reference speech data corresponding to a reference speech signal of the pre-determined object; and
a processing unit, configured to extract a voiceprint representation vector of the pre-determined object from the reference speech data, the voiceprint representation vector being configured to represent a voiceprint characteristic of the pre-determined object,
the processing unit being further configured to input the mixed speech data and the voiceprint representation vector into a preset speech segmentation model, the speech segmentation model being configured to segment, based on an attention mechanism, the mixed speech data to obtain a target speech signal matching the voiceprint characteristic; and
the processing unit being further configured to generate a speech file of the pre-determined object based on the target speech signal obtained through segmentation.

13. A computer device, comprising:
a processor, configured to execute a computer program; and
a computer-readable storage medium, having the computer program stored therein, the computer program, when executed by the processor, implementing the speech processing method according to any one of claims 1 to 11.

14. A computer-readable storage medium, having a computer program stored therein, the computer program being configured to be loaded and executed by a processor to perform the speech processing method according to any one of claims 1 to 11.

15. A computer program product, comprising a computer program, the computer program, when executed by a processor, implementing the speech processing method according to any one of claims 1 to 11.
